# EUROPÄISCHE PATENTSCHRIFT

(11) **EP 1 602 796 B1**
(45) Veröffentlichungstag und Bekanntmachung des Hinweises auf die Patenterteilung: **27.04.2016**
(21) Anmeldenummer: 05011583.1
(22) Anmeldetag: 30.05.2005
(51) Int. Cl.: E05F 15/603, F16D 65/14, F16D 121/20, F16D 121/24

(54) **Antriebsvorrichtung für eine motorische verstellbare Kraftfahrzeugtür oder -klappe**
Drive device for a motor operated vehicle door or lid
Dispositif d'entraînement pour une porte ou un hayon de véhicule entraîné par un moteur

(30) Priorität: 04.06.2004 DE 102004027533; 25.10.2004 DE 202004016542 U
(43) Veröffentlichungstag der Anmeldung: 07.12.2005
(73) Patentinhaber: Brose Schliesssysteme GmbH & Co. KG, 42369 Wuppertal (DE)
(72) Erfinder: Güler, Mehmet, 45661 Recklinghausen (DE); Kotyrba, Slawomir, 42283 Wuppertal (DE); Heinrich, Andreas, 42579 Heiligenhaus (DE); Bartel, Peter, 45529 Hattingen (DE); Kamberg, Axel, 50169 Kerpen-Horrem (DE)
(74) Vertreter: Gottschald, Jan

(56) Entgegenhaltungen:
- EP-A1- 1 238 207
- DE-A1- 4 041 480
- DE-A1- 10 117 934
- DE-A1- 10 225 580
- DE-A1- 10 230 591
- DE-A1- 19 935 589
- US-A- 3 628 401

## Beschreibung

Die vorliegende Erfindung betrifft eine Antriebsvorrichtung für eine motorisch verstellbare Kraftfahrzeugtür oder -klappe gemäß dem Oberbegriff des Anspruchs 1.

Unter dem Begriff "Kraftfahrzeugtür" ist hier neben der Seitentür eines Kraftfahrzeugs auch die Schiebetür o. dgl. eines Kraftfahrzeugs zu verstehen. Als Kraftfahrzeugklappe wird hier eine Heckklappe, eine Kofferraumklappe, ggf. auch eine Motorhaube etc. bezeichnet.
Aus dem Stand der Technik ist ein Kraftfahrzeugschloß (DE 199 35 589 A1) bekannt, bei dem ein Planetengetriebe als Getriebe für den Antrieb eines mit einer Sperrklinke gekuppelten Betätigungshebels dient. Das Planetengetriebe ist insoweit Teil einer Öffnungshilfe. Das Planetengetriebe ist dabei so ausgeführt, daß der Betätigungshebel durch zwei unterschiedliche Betätigungselemente, nämlich ein Normal-Betätigungselement und ein Notfall-Betätigungselement antreibbar ist. Die unterschiedlichen Betätigungselemente dienen dabei zu einer dem jeweiligen Zweck angepaßten Kraftübertragung. Das Planetengetriebe ermöglicht die jeweilige Betätigung dadurch, daß der Antrieb mit jeweils unterschiedlicher Drehrichtung betrieben wird. Durch das Planetengetriebe wird dabei eine kompakte Bauweise erzielt.
Ferner ist aus dem Stand der Technik eine Antriebsvorrichtung (WO 00/36259 A1) bekannt, die dazu dient, eine Kraftfahrzeugklappe motorisch zu betätigen, also zu öffnen und zu schließen. Hierzu ist an jeder Seite der Kraftfahrzeugklappe jeweils ein Motor mit einem dem Motor zugeordneten Getriebe angeordnet, mit dem die Kraftfahrzeugklappe motorisch betätigbar ist. Um auch eine manuelle Betätigung der Kraftfahrzeugklappe zu ermöglichen, sind der Motor und das Getriebe so ausgeführt, daß der Motor bei manueller Betätigung der Kraftfahrzeugklappe nicht blockiert, sondern mitgedreht wird.

Demgegenüber erlaubt eine weitere bekannte Antriebsvorrichtung (DE 40 41 480 A1) eine manuelle und eine motorische Betätigung von Funktionsteilen, insbesondere einer Kraftfahrzeugtür oder -klappe, ohne daß der Motor bei manueller Betätigung der Kraftfahrzeugtür oder -klappe mitbewegt wird. Hier ist ein Planetengetriebe vorgesehen, bei dem das Hohlrad motorisch antreibbar ist. Eine mit der Kraftfahrzeugtür oder -klappe antriebstechnisch gekoppelte Abtriebswelle des Planetengetriebes ist starr mit dem Planetenradträger gekoppelt. Zudem ist eine Bremsvorrichtung vorgesehen, die während der motorischen Betätigung des Hohlrads das Sonnenrad blockiert, so daß die Bewegung des Hohlrades auf die Planetenräder und dadurch auf den Planetenradträger übertragen wird, so daß letztendlich die Kraftfahrzeugtür oder -klappe betätigt wird.

Für eine manuelle Betätigung der Kraftfahrzeugtür oder -klappe wird das Sonnenrad mittels eines Kurbelarms angetrieben. Das Hohlrad wird dabei durch die Kopplung mit dem selbsthemmend ausgelegten motorischen Antrieb blockiert, so daß das Drehmoment des Sonnenrades auf den Planetenradträger und damit auf die Abtriebswelle übertragen wird. Bewegt man bei stehendem Antriebsmotor die Kraftfahrzeugtür oder -klappe selbst von Hand, so ist auch eine solche Bewegung möglich, weil dann der Kurbelarm einfach rückwärtsdrehend mitgeschleppt wird.

Die Bremsvorrichtung wird bei der zuvor beschriebenen Antriebsvorrichtung durch den selben Antrieb betätigt, der auch das Hohlrad antreibt. Dadurch ist eine schnelle Entkopplung zwischen Antriebswelle und Abtriebswelle im Notfall, beispielsweise beim Einklemmen einer Hand in einer Schiebetür, nicht möglich. Zuerst muß der Antrieb vollständig zur Ruhe gebracht werden, bevor die Kraftwirkung auf die Abtriebswelle unterbunden und eine manuelle oder motorische Betätigung des Funktionsteils in die entgegengesetzte Richtung möglich ist. Zudem ist die Bremswirkung bei dieser Ausgestaltung der Antriebsvorrichtung nicht optimal.

Die bekannte Antriebsvorrichtung (DE 101 17 934 A1), von der die Erfindung ausgeht, dient der motorischen Betätigung der Heckklappe eines Kraftfahrzeugs. Die Antriebsvorrichtung weist einen Motor und ein dem Motor zugeordnetes Planetengetriebe auf. Die Abtriebswelle des Planetengetriebes ist antriebstechnisch mit der Heckklappe gekoppelt. Um neben der motorischen Betätigung auch eine leichte manuelle Betätigung gewährleisten zu können, dient auch hier das Planetengetriebe als Kupplung. Hierfür ist eine Bremsvorrichtung vorgesehen, die eine Bremsung des Hohlrades für die motorische Betätigung und die eine Freigabe des Hohlrades für eine manuelle Betätigung erlaubt. Die Bremsvorrichtung weist eine Bremse sowie einen Bremsantrieb auf, wobei die Bremse mittels des Bremsantriebs zwischen einer Bremsstellung und einer Lüftstellung verstellbar ist. Zum Verstellen der Bremse in die Bremsstellung wird die Bremse auf das Hohlrad zu bewegt, bis sie kraft- oder formschlüssig in Eingriff mit dem Hohlrad kommt und dieses entsprechend abbremst bzw. blockiert.

Nachteilig bei der bekannten Antriebsanordnung mit dem beschriebenen Bremskonzept ist die Tatsache, daß die Bremswirkung insbesondere bei schweren Heckklappen nur gewährleistet werden kann, wenn der Bremsantrieb entsprechend stark ausgelegt ist. Dies führt zu hohen Bauraumanforderungen sowie zu einem hohen Kostenaufwand.

Es darf noch darauf hingewiesen werden, daß ähnliche Antriebsanordnungen auch für die Anwendung in Schiebetüren vorgesehen sind (US 6,125,586 A, US 6,460,295 B1). Bei diesen Antriebsanordnungen ist zur Realisierung der Kupplungswirkung eine Bremsvorrichtung vorgesehen, die eine Bremsung des Sonnenrades erlaubt.

Der Erfindung liegt das Problem zugrunde, die bekannte Antriebsvorrichtung derart auszugestalten und weiterzubilden, daß eine hohe Bremswirkung mit vergleichsweise geringem Aufwand realisierbar ist.

Das obige Problem wird zunächst durch eine Antriebsvorrichtung mit den Merkmalen von Anspruch 1 gelöst.

Zunächst ist es vorgesehen, daß die Betätigung der Bremsvorrichtung unabhängig von dem eigentlichen Antrieb der Kraftfahrzeugtür oder -klappe gewährleistet ist. Hierdurch ist es möglich auch bei laufendem Antrieb der Kraftfahrzeugtür oder -klappe die Antriebswelle von der Abtriebswelle zu entkoppeln und dadurch auf Notfälle schnell reagieren zu können. Dies ist dadurch realisiert, daß die Bremsvorrichtung einen von dem die Abtriebswelle antreibenden Antrieb separaten Bremsantrieb aufweist.

Die Antriebsvorrichtung ist so ausgeführt, daß die Antriebswelle mit einem der Elemente Sonnenrad, Planetenradträger und Hohlrad eines Planetengetriebes gekoppelt ist. Ein zweites der Elemente Sonnenrad, Planetenradträger und Hohlrad ist mit der Abtriebswelle gekoppelt. Die Bremse der Antriebsvorrichtung ist von einer ersten Stellung - Lüftstellung -, in der das dritte der Elemente Sonnenrad, Planetenradträger und Hohlrad nicht gebremst bzw. blockiert ist und in dieser Stellung die Kraftfahrzeug oder -klappe von Hand unbehindert von der Antriebsvorrichtung verstellbar ist in eine zweite Stellung der Bremse - Bremsstellung - verstellbar, in der das dritte der Elemente Sonnenrad, Planetenradträger und Hohlrad gebremst bzw. blockiert ist und dadurch die Antriebswelle mit der Abtriebswelle gekuppelt ist, so daß in dieser Stellung die Kraftfahrzeugtür oder -klappe motorisch verstellbar ist.

Gemäß dem Vorschlag ist die Bremsvorrichtung, insbesondere die Bremse, über ein weiteres Getriebe mit dem dritten der Elemente Sonnenrad, Planetenradträger und Hohlrad für dessen Bremsung bzw. Blockierung gekoppelt. Durch die geeignete Auslegung des Getriebes ist es hiermit möglich, die für eine hinreichende Bremswirkung vom Bremsantrieb aufzubringende Antriebskraft vergleichsweise gering zu halten.

Bevorzugt ist vorgesehen, daß die Ausgestaltung der Bremse mit einem kreisbogenförmigen Bügel, der mittels einer Schwenkachse an einem Ende schwenkbar gelagert ist, zu einer optimalen Ausnutzung der vom Bremsantrieb aufgebrachten Antriebskraft führt. Optimal ist es, wenn der Bremsantrieb am freien Ende des kreisförmigen Bügels angreift und den Bügel gewissermaßen um das zu bremsende Element herumzieht. Dabei kann es vorteilhaft sein, wenn der kreisförmige Bügel jedenfalls geringfügig elastisch ausgestaltet ist.

Bevorzugt ist, dass eine Antriebsvorrichtung eine Bremsvorrichtung umfasst, deren Bremsantrieb einen Permanentmagneten in Kombination mit einem Elektromagneten aufweist. Das vom Permanentmagneten erzeugte Magnetfeld bewirkt eine Kraftwirkung auf die Bremse in Richtung der Bremsstellung. Die Bremse ist durch dieses Magnetfeld gewissermaßen in Richtung der Bremsstellung magnetisch vorgespannt.

Wesentlich ist für diese bevorzugte Ausgestaltung, daß je nach Polung des Elektromagneten das vom Permanentmagneten erzeugte Magnetfeld mittels des Elektromagneten abschwächbar bzw. verstärkbar ist. Hierdurch läßt sich mit einer vergleichweise schwachen Auslegung des Elektromagneten eine hohe Kraftwirkung auf die Bremse in Richtung der Bremsstellung - Bremskraft - erzeugen.

In bevorzugter Ausgestaltung wird das vom Permanentmagneten erzeugte Magnetfel- dafür genutzt, die Bremse bei abgeschaltetem Elektromagneten in der Bremsstellung zu halten, wobei in diesem Zustand die Bremskraft entsprechend reduziert ist. Dies kann vorteilhaft sein für die vorübergehende Fixierung einer Heckklappe o. dgl. in der geöffneten Stellung oder in einer Zwischenstellung, ohne den Elektromagneten ansteuern zu müssen. Ferner bietet diese Variante eine zusätzliche Sicherheit dann, wenn beispielsweise während der motorischen Betätigung der Heckklappe die Spannungsversorgung ausfällt. Dann stellt das vom Permanentmagneten erzeugte Magnetfeld sicher, daß ein unerwartetes Zufällen der Heckklappe verhindert wird. Bei entsprechender Auslegung ist in einem solchen Fall die Bremskraft gerade so reduziert, daß auch eine manuelle Betätigung noch möglich ist.

Es darf darauf hingewiesen werden, daß mit der Abschwächung bzw. Verstärkung des Magnetfeldes vorliegend die Abschwächung bzw. Verstärkung der Feldstärke des Magnetfeldes gemeint ist.

Weitere Einzelheiten, Merkmale, Ziele und Vorteile der vorliegenden Erfindung werden nachfolgend anhand der Zeichnung eines bevorzugten Ausfuhrungsbeispiels näher erläutert. In der Zeichnung zeigt
- Fig. 1.: eine schematische Ansicht eines Kraftfahrzeugs mit einer Seitentür, einer Schiebetür und einer Heckklappe sowie mit einer Antriebsvorrichtung für die Schiebetür,
- Fig. 2: eine schematische Ansicht einer gattungsgemäßen Antriebsvorrichtung,
- Fig. 3: eine schematische Ansicht einer zweiten gattungsgemäßen Antriebsvorrichtung,
- Fig. 4: eine schematische Ansicht einer dritten gattungsgemäßen Antriebsvorrichtung,
- Fig. 5: eine schematische Ansicht einer vierten Antriebsvorrichtung,
- Fig. 6: die Antriebsvorrichtung gemäß Fig. 5 bei in Bremsstellung befindlicher Bremse a) in einer ersten Seitenansicht und b) in einer zweiten, ausscbnittsweisen Seitenansicht,
- Fig. 7: die Antriebsvorrichtung gemäß Fig. 5 bei in Lüftstellung befindlicher Bremse a) in einer ersten Seitenansicht und b) in einer zweiten, ausschnittsweisen Seitenansicht,
- Fig. 8: die Bremsvorrichtung der Antriebsvorrichtung gemäß Fig. 5 in einer Schnittdarstellung entlang der Ebene VIII-VIII a) in der Bremsstellung und b) in der Lüftstellung.

Bei den Figuren der Zeichnung werden für gleiche oder ähnliche Teile die selben Bezugszeichen verwendet. Damit soll angedeutet werden, daß entsprechende oder vergleichbare Eigenschaften und Vorteile erreicht werden, auch wenn eine wiederholte Beschreibung dieser Teile unterbleibt.

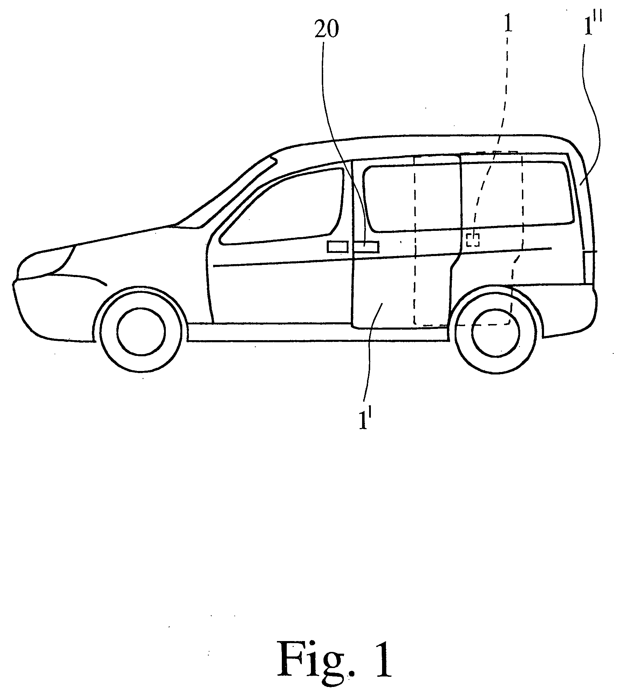

Fig. 1 zeigt eine Antriebsvorrichtung 1 für eine motorisch verstellbare Kraftfahrzeugtür 1' oder Kraftfahrzeugklappe 1". Bei einer Kraftfahrzeugtür 1' handelt es sich dabei insbesondere um eine Schiebetür, bei einer Kraftfahrzeugklappe insbesondere um eine Heckklappe 1" oder eine Kofferraumklappe.
Die Kraftfahrzeugtür 1' bzw. -klappe ist mittels der Antriebsvorrichtung 1 sowohl motorisch als auch manuell betätigbar, d. h. sie kann sowohl motorisch als auch manuell geöffnet und geschlossen werden.
Die Antriebsvorrichtung 1 weist ein Planetengetriebe 2 und eine Bremsvorrichtung 3 mit einer Bremse 4 auf. Das Planetengetriebe 2 weist eine Antriebswelle 5, eine Abtriebswelle 6, ein Sonnenrad 7, einen Planetenradträger 8 mit Planetenrädern 9 und ein Hohlrad 10 auf.
Die Antriebswelle 5 ist durch einen Antrieb (nicht gezeigt) motorisch antreibbar. Der Antrieb kann dabei als Elektromotor, als pneumatischer Antrieb, als hydraulischer Antrieb o. dgl. ausgeführt sein.
Die Abtriebswelle 6 ist mit der Kraftfahrzeugtür 1' oder -klappe mittelbar, d. h. durch Zwischenschaltung weiterer Elemente wie Hebel, Bowdenzüge, Zahnräder etc., oder unmittelbar d. h. ohne Zwischenschaltung weiterer Elemente, antriebstechnisch gekoppelt. Wenn die Abtriebswelle 6 angetrieben wird, wird durch die antriebstechnische Kopplung gleichzeitig die Kraftfahrzeugtür 1' oder -klappe betätigt bzw. umgekehrt, wenn die Kraftfahrzeugtür 1' oder -klappe von Hand bewegt wird, wird auch die Abtriebswelle 6 bewegt.

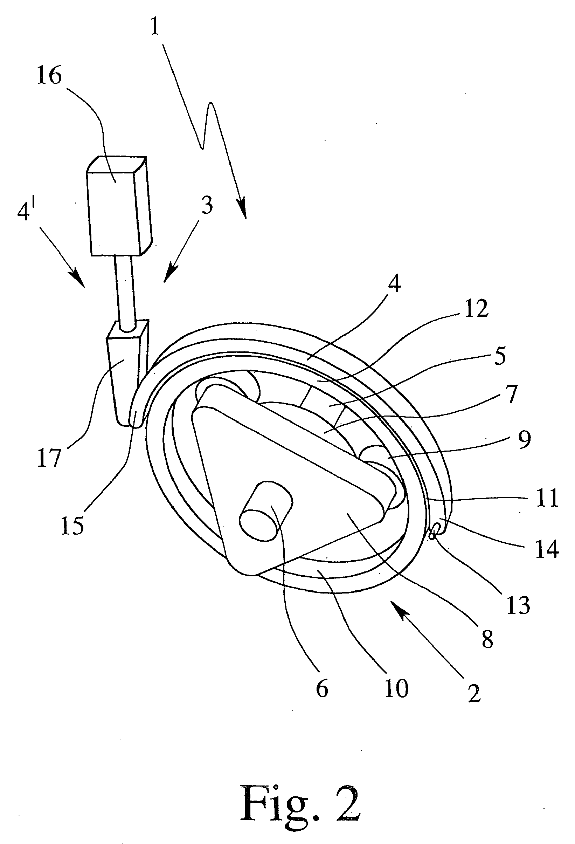

Fig. 2 zeigt eine gattungsgemäße Antriebsvorrichtung 1 mit der Bremsvorrichtung 3 in Lüftstellung. Bei in Lüftstellung befindlicher Bremsvorrichtung 3 sind die Antriebswelle 5 und die Abtriebswelle 6 nicht miteinander gekuppelt. Selbst wenn die Antriebswelle 5 angetrieben wird, wird diese Bewegung nicht auf die Abtriebswelle 6 übertragen. Umgekehrt wird aber auch eine Bewegung der Abtriebswelle 6 nicht auf die Antriebswelle 5 übertragen bzw. von dieser blockiert. Um eine Bewegung zwischen Antriebswelle 5 und Abtriebswelle 6 zu übertragen, ist es erforderlich, die Antriebswelle 5 mit der Abtriebswelle 6 zu kuppeln.
Die Antriebswelle 5 ist mit einem der Elemente Sonnenrad 7, Planetenradträger 8 und Hohlrad 10 des Planetengetriebes 2, hier und vorzugsweise mit dem Sonnenrad 7, gekoppelt. Die Abtriebswelle 6 ist mit einem zweiten der Elemente Sonnenrad 7, Planetenradträger 8 und Hohlrad 10, hier und vorzugsweise mit dem Planetenradträger 8 gekoppelt. Bei in Lüftstellung befindlicher Bremsvorrichtung 3 ist das dritte der Elemente Sonnenrad 7, Planetenradträger 8 und Hohlrad 10, hier und vorzugsweise das Hohlrad 10, frei drehbar. Um die Antriebswelle 5 mit der Abtriebswelle 6 zu kuppeln, ist das Hohlrad 10 mittels der Bremse 4 der Bremsvorrichtung 3 blockierbar. Das Hohlrad 10 des Planetengetriebes 2 ist dann nicht mehr drehbar. Dadurch ist eine Kupplung zwischen Antriebswelle 5 und Abtriebswelle 6 erzielt, wie im Folgenden noch näher erläutert wird.
Zum Bremsen bzw. Blockieren des dritten der Elemente von Sonnenrad 7, Planetenradträger 8 und Hohlrad 10 weist die Bremsvorrichtung 3 einen von dem die Antriebswelle 5 antreibenden Antrieb separaten Bremsantrieb 4' für die Bremse 4 auf. Die Bremse 4 ist dann mittels des Bremsantriebs 4' zumindest von einer der beiden Stellungen - Lüftstellung, Bremsstellung - in die andere der beiden Stellungen verstellbar.

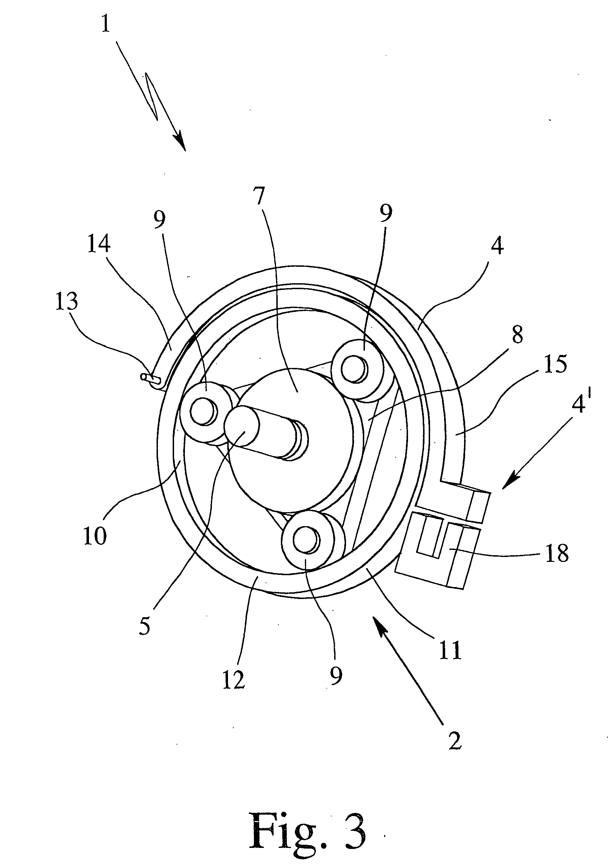

Bei den in den Fig. 2, 3 dargestellten Ausführungsformen einer gattungsgemäßen Antriebsvorrichtung ist die Bremse 4 mittels einer Schwenkachse 13 an einem Ende 14 schwenkbar gelagert. Es handelt sich bei der Bremse 4 um einen kreisbogenförmigen Bügel, dessen Innenumfang an den Außenumfang des Hohlrades 10 angepaßt ist. Am zweiten Ende 15 der Bremse 4 ist der Bremsantrieb 4' vorgesehen. Fig. 2 zeigt die Lüftstellung der Bremse 4 mit einem Spalt zwischen der Bremse 4 und dem Hohlrad 10. Die Bremse 4 ist durch den Bremsantrieb 4' in Bremsstellung verstellbar. Der kreisbogenförmige Bügel wird dabei unter Überwindung des Spaltes an den Außenumfang des Hohlrades 10 herangedrückt.
Die Bremse 4 wird also mittels des Bremsantriebs 4' in Fig. 2 nach unten bewegt und auf die äußere Mantelfläche 11 des Hohlrads 10 gedrückt. Die Bremse 4 ist hier und vorzugsweise so angeordnet und ausgeführt, daß sie mit einer möglichst großen Fläche mit der äußeren Mantelfläche 11 des Hohlrads 10 in Eingriff kommt.

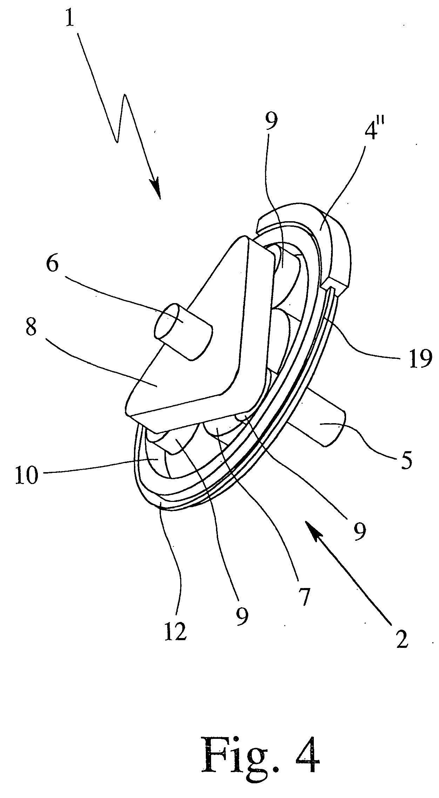

Die in Fig. 4 gezeigte Anordnung zeigt eine Ausführung als Wirbelstrombremse mit dem Magneten 4". Das ist besonders dann vorteilhaft, wenn die Raumverhältnisse keine ausladende Bremsvorrichtung 3 zulassen.

Hier und vorzugsweise weist das Hohlrad 10 eine Leiste 19 auf. Die Bremse 4 ist um die Leiste 19 herum angeordnet, so daß die Kraftwirkung und damit auch die Bremswirkung von beiden Seiten auf die Leiste 19 einwirken kann. Die Leiste 19 kann hier vorteilhaft auch zusätzlich nach Art der rotierenden Scheibe einer klassischen Scheibenbremse genutzt werden.

Bei den in den Fig. 2, 3 dargestellten Ausführungsformen ist die Bremse 4 von der Lüftstellung in die Bremsstellung mittels des Bremsantriebs 4' und von der Bremsstellung zurück in die Lüftstellung unter Federkraft verstellbar. Wenn die Bremse 4 in der Bremsstellung dann durch Formschluß und/oder durch dauernden Betrieb des Bremsantriebs 4' gehalten wird, ist eine Bewegungsumkehr des Bremsantriebs 4' zur Rückstellung der Bremse 4 in die Lüftstellung nicht erforderlich.

Alternativ dazu kann die Antriebsvorrichtung 1 so ausgeführt sein, daß die Bremse 4 von der Lüftstellung in die Bremsstellung und von der Bremsstellung in die Lüftstellung mittels des Bremsantriebs 4' verstellbar ist. Dabei kann die Antriebsvorrichtung 1 auch so ausgeführt sein, daß entweder die Lüftstellung die Ruhestellung der Bremse 4 ist, oder aber daß die Bremsstellung die Ruhestellung der Bremse 4 ist. Die Variante, daß die Bremsstellung die Ruhestellung der Bremse 4 ist, ist aber insofern ungünstig, als eine manuelle Betätigung der Kraftfahrzeugtür 1' oder -klappe dann nur möglich ist, wenn zuvor der Bremsantrieb 4' angeschaltet wurde. Eine manuelle Betätigung soll jedoch auch gerade dann möglich sein, wenn die Antriebsvorrichtung 1 nicht mit Energie versorgbar ist.

Eine weitere Alternative besteht darin, daß die Bremse 4 von der Bremsstellung, die bei dieser Alternative wieder die Normalstellung ist, in die Lüftstellung mittels des Bremsantriebs 4' und von der Lüftstellung in die Bremsstellung unter Federkraft verstellbar ist, so daß eine Bewegungsumkehr für den Bremsantrieb 4' wiederum nicht erforderlich ist. Bei dieser Ausführungsform wird die Bremse 4 vorzugsweise durch Formschluß und/oder durch den Bremsantrieb 4' in der Lüftstellung gehalten. Es treten aber ähnlich Probleme auf wie zuvor erläutert.

Das dritte der Elemente Sonnenrad 7, Planetenradträger 8 und Hohlrad 10 weist eine äußere Mantelfläche 11 auf, die hier als Bremsbelag ausgeführt ist, um eine möglichst gute Bremswirkung zu erreichen. Anstelle dessen kann die äußere Mantelfläche 11 des dritten der Elemente Sonnenrad 7, Planetenradträger 8 und Hohlrad 10 auch einen zusätzlichen Bremsbelag aufweisen. Zudem kann je nach Ausführung der Bremsvorrichtung 3 auch eine Seitenfläche 12 des dritten der Elemente Sonnenrad 7, Planetenradträger 8 und Hohlrad 10 als Bremsbelag ausgeführt sein oder einen zusätzlichen Bremsbelag aufweisen. Dabei ist es jedoch nicht notwendig, daß die gesamte Seitenfläche 12 als Bremsbelag ausgeführt ist oder den zusätzlichen Bremsbelag aufweist, sondern es reicht aus, daß der Teil der Seitenfläche 12 als Bremsbelag ausgeführt ist oder den Bremsbelag aufweist, der mit der Bremse 4 bei einem Bremsvorgang in Eingriff kommt. Hier befindet sich der Bremsbelag am Hohlrad 10. Die Anordnung des Bremsbelags am Hohlrad 10 hat den besonderen Vorteil, daß von selbst die größtmögliche Fläche zur Verfügung steht.

Hier und vorzugsweise ist das Sonnenrad 7 als erstes der Elemente Sonnenrad 7, Planetenradträger 8 und Hohlrad 10 starr mit der Antriebswelle 5 gekoppelt, so daß das Sonnenrad 7 zusammen mit der Antriebswelle 5 angetrieben wird. Der Antrieb erfolgt dabei vorzugsweise durch einen Elektromotor in Verbindung mit einem Getriebe. Das Getriebe ist vorzugsweise als Schneckengetriebe und mit Selbsthemmung ausgeführt.

Hier ist die Abtriebswelle 6, durch die letztendlich die Kraftfahrzeugtür 1' oder -klappe motorisch betätigt wird, mit dem Planetenradträger 8 als zweitem der Elemente Sonnenrad 7, Planetenradträger 8 und Hohlrad 10 starr gekoppelt. Durch die starre Kopplung der Antriebswelle 5 mit dem Sonnenrad 7 und der Abtriebswelle 6 mit dem Planetenradträger 8 wird ein passendes Untersetzungsverhältnis zwischen dem Antrieb und der Kraftfahrzeugtür 1' oder - klappe gewährleistet. Sofern ein anderes Übersetzungsverhältnis erforderlich ist, kann die Antriebswelle 5 und die Abtriebswelle 6 aber auch anders gekoppelt sein.

Die Betätigung der Kraftfahrzeugtür 1' oder -klappe kann bei in Lüftstellung, befindlicher Bremsvorrichtung 3 manuell durch hier nicht gezeigte Elemente erfolgen. Die Betätigung ist durch das Planetengetriebe 2 oder den Antrieb der Antriebswelle 5 jedenfalls nicht beeinträchtigt, da die Antriebswelle 5 von der Abtriebswelle 6 entkoppelt ist. Bei manueller Betätigung der Kraftfahrzeugtür 1' oder -klappe wird zwar die Abtriebswelle 6 gedreht, diese überträgt die Bewegung aber auf das in dieser Stellung nicht blockierte Hohlrad 10, da die Antriebswelle 5 durch die Kopplung mit dem Antrieb der Bewegung einen größeren Widerstand entgegensetzt als das Hohlrad 10. Die Antriebswelle 5 bleibt somit in ihrer Position stehen.

Für die motorische Betätigung wird das Hohlrad 10 durch die Bremse 4 der Bremsvorrichtung 3 blockiert. Das von der Antriebswelle 5 angetriebene Sonnenrad 7 versetzt die Planetenräder 9 in eine Drehbewegung. Die Planetenräder 9 rollen an der Innenseite des Hohlrads 10 ab und drehen dabei den Planetenradträger 8 und die Abtriebswelle 6 mit. Die Bewegung der Abtriebswelle 6 wird dann mittelbar oder unmittelbar auf die Kraftfahrzeugtür 1' oder - klappe übertragen.

Besonders bevorzugt ist die Ausgestaltung der Bremse 4 als reibschlüssige Bremse. In der in Fig. 2 gezeigten Ausführungsform ist die Bremse 4 der Bremsvorrichtung 3 als Backenbremse ausgeführt, die mit dem Hohlrad 10 zumindest abschnittsweise im wesentlichen reibschlüssig in Eingriff bringbar ist. Als Backenbremse wird dabei eine Bremse bezeichnet, die von außen oder von innen gegen eine Fläche, hier das Hohlrad 10, gedrückt wird. Die Bremse 4 kann aber auch als Scheibenbremse ausgeführt sein. Eine Scheibenbremse ist hingegen eine Bremse, die nicht flächig an eine Gegenfläche gedrückt wird, sondern die eine Scheibe beidseits erfaßt und zwischen zwei Bremsbelägen einklemmt.

In weiterer bevorzugter Ausgestaltung ist die Bremse 4 als formschlüssige Bremse oder als formreibschlüssige Bremse ausgestaltet, wobei die Bremse 4 hierfür vorzugsweise eine entsprechende Verzahnung o. dgl. aufweist.

Die Bremsvorrichtung 3 kann je nach Ausführung und Steuerung der Antriebsvorrichtung 1 mit Selbsthemmung oder ohne Selbsthemmung ausgeführt sein. Bei einer Ausführung mit Selbsthemmung muß die Bremse 4 für den Bremsvorgang motorisch mit dem Hohlrad 10 in Eingriff gebracht werden, anschließend kann der Bremsantrieb 4' abgeschaltet werden. Die Bremse 4 wird insofern durch den Bremsantrieb 4' in der Bremsstellung gehalten (vgl. Ausführungen zuvor), so daß die Bremse 4 mit dem Hohlrad 10 in Eingriff bleibt, so daß dieses weiterhin gebremst wird bzw. blockiert ist. Bei der Ausführung der Bremsvorrichtung 3 ohne Selbsthemmung und ohne Formschluß ist es dagegen erforderlich, daß der Bremsantrieb 4' während des gesamten Bremsvorgangs eingeschaltet bleibt und die Bremse 4 dadurch in der Bremsstellung gehalten wird. Diese Ausführungsform bietet sicherheitstechnisch den Vorteil, daß ein Entkuppeln von Antriebswelle 5 und Abtriebswelle 6 schneller möglich ist, da ein einfaches Ausschalten des Bremsantriebs 4' der Bremse 4 ausreicht. Bei der Ausführungsform mit Selbsthemmung hingegen muß die Bremse 4 erst aktiv durch den Bremsantrieb 4' zurück in ihre Lüftstellung bewegt werden, bei der Ausführung mit Formschluß muß dieser gelöst werden.

Der Bremsantrieb 4' der Bremse 4 weist hier (Fig. 2) einen Elektromotor 16 und ein Getriebe 17 auf, das als Schneckengetriebe ausgeführt ist. Die Bremse 4 ist mittels des Elektromotors 16 mit dem Hohlrad 10 in Eingriff bringbar. Dies erfolgt dadurch, daß die Bremse 4 durch den Elektromotor 16 aus der Lüftstellung um die Schwenkachse 13 in die Bremsstellung verschwenkt wird und dann im wesentlichen reibschlüssig an der äußeren Mantelfläche 11 des Hohlrads 10 anliegt. Das Getriebe 17 ist hier und vorzugsweise an dem zweiten Ende 15 der Bremse 4 angeordnet.

Wie schon zuvor erläutert, ist es möglich, die Bremsvorrichtung 3 so auszuführen und zu steuern, daß der Bremsantrieb 4', hier insbesondere der Elektromotor 16, nur so lange angetrieben wird, bis die Bremse 4 die Bremsstellung erreicht, insbesondere, bis die Bremse 4 und das Hohlrad 10 in Eingriff kommen. Durch die Selbsthemmung der Bremsvorrichtung 3 bleibt die Bremse 4 dennoch mit dem Hohlrad 10 in Eingriff. Das gleiche gilt analog für die Verstellung der Bremse 4 in die Lüftstellung.

Es ist jedoch auch möglich, die Bremsvorrichtung 3 so auszuführen und zu steuern, daß der Bremsantrieb 4', hier insbesondere der Elektromotor 16, während des gesamten Bremsvorgangs und/oder während des gesamten Lüftvorgangs angetrieben wird. Eine Selbsthemmung der Bremsvorrichtung 3 ist dann nicht erforderlich. Nach dem Ausschalten des Bremsantriebs 4' wird die Bremse 4 dann wieder in ihre Lüftstellung zurückbewegt. Dies wird meist durch Federkraft erfolgen.

Fig. 3 zeigt eine weitere Ausführungsform einer gattungsgemäßen Antriebsvorrichtung 1. Der Bremsantrieb 4' der Bremse 4 ist hier als Solenoid 18 zur Verlagerung der Bremse 4 hier aus der Lüftstellung, in die Bremsstellung ausgeführt. Die Bremse 4 ist wiederum wie zuvor als Backenbremse ausgeführt, die mit der äußeren Mantelfläche 11 des Hohlrads 10 in Eingriff bringbar ist. Die Bremsvorrichtung 3 kann hier auch wieder mit oder ohne Selbsthemmung ausgeführt sein. Auch ansonsten weist die Antriebsvorrichtung 1 die gleichen Merkmale und Vorteile wie zuvor beschrieben auf.

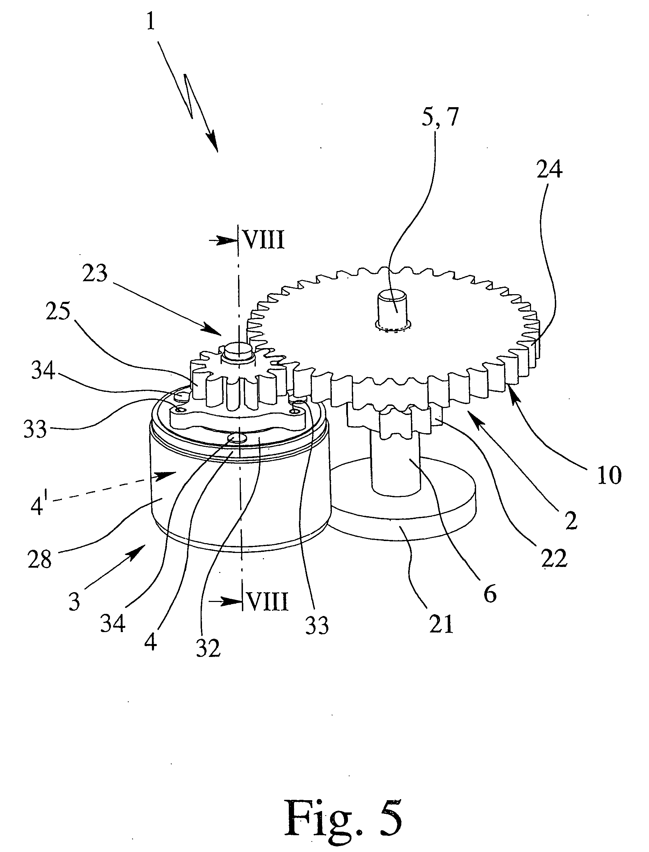

Die Fig. 5 bis 8 zeigen eine Ausführungsform der Erfindung. Hier steht das Planetengetriebe 2 in ganz besonderer Weise in Eingriff mit der Bremsvorrichtung 3, wie noch erläutert wird.
Bei der in Fig. 5 dargestellten Ausführungsform ist das Sonnenrad 7 des Planetengetriebes 2 mit der Abtriebswelle 5 gekoppelt bzw. verbunden. Für die Realisierung eines Schneckenradantriebs ist die Antriebswelle 5 entsprechend mit einem Schneckenrad 21 ausgestattet, das mit der Schnecke eines nicht dargestellten Antriebsmotors kämmt. Die Abtriebswelle 6 ist bei dieser Ausführungsform mit dem Planetenradträger 8 gekoppelt bzw. verbunden. Die Abtriebswelle 6 ist hier als Hohlwelle ausgestaltet und wird von der Antriebswelle 5 durchdrungen. Für die antriebstechnische Kopplung der Abtriebswelle 6 mit einem nicht dargestellten Stellelement ist die Abtriebswelle 6 mit einem Zahnrad 22 ausgestattet. Das Hohlrad 10 nimmt den Planetenradträger 8 mit den zugeordneten Planetenrädern 9 auf, wie es in den Fig. 2 bis 4 gezeigt ist. Das Hohlrad 10 bildet bei dieser Ausführungsform das dritte der Elemente Sonnenrad 7, Planetenradträger 8 und Hohlrad 10 im obigen Sinne und ist daher bremsbar ausgestaltet. Je nach Anwendungsfall kann es aber auch vorteilhaft sein, wie oben beschrieben, das Sonnenrad 7 oder den Planetenradträger 8 bremsbar auszugestalten. Für die Bremsung bzw. Blockierung des Hohlrades 10 ist die Bremse 4 über ein weiteres Getriebe 23 mit dem Hohlrad 10 gekoppelt.

Für die Ausgestaltung des weiteren Getriebes 23 sind eine Reihe von Möglichkeiten denkbar. Eine besonders einfache Realisierung ergibt sich bei der Ausgestaltung des weiteren Getriebes 23 als Stirnradgetriebe. Hierfür weist das Hohlrad 10 eine Außenverzahnung 24 auf, die mit einem zugeordneten Zahnradelement 25 der Bremsvorrichtung 3 in Eingriff steht. Das weitere Getriebe 23 kann aber auch ein Planetengetriebe, ein Zahnriehmen, eine Getriebekette o. dgl. sein.

Durch eine entsprechende Auslegung des weiteren Getriebes 23 läßt sich die für die Bremsung bzw. Blockierung des Hohlrades 10 von der Bremsvorrichtung 3 aufzubringende Kraft weitgehend beliebig reduzieren, was vorteilhaft für die Auslegung des Bremsantriebs 4' ist. Dies zeigt sich auch in den Fig. 5 bis 7, die die Ausgestaltung des weiteren Getriebes 23 entsprechend als Untersetzungsgetriebe zeigen.

Die oben beschriebene Kopplung der Bremse 4 mit dem dritten der Elemente Sonnenrad 7, Planetenradträger 8 und Hohlrad 10 über ein weiteres Getriebe 23 ist grundsätzlich auf alle Arten von Bremsvorrichtungen 3 anwendbar. Die in Fig. 5 dargestellte Antriebsvorrichtung 1 zeigt eine ganz besonders vorteilhafte Ausgestaltung der Bremsvorrichtung 3. Diese Antriebsvorrichtung 1 ist auch im Hinblick auf die Ausgestaltung der Breinsvorrichtung 3 bevorzugt.

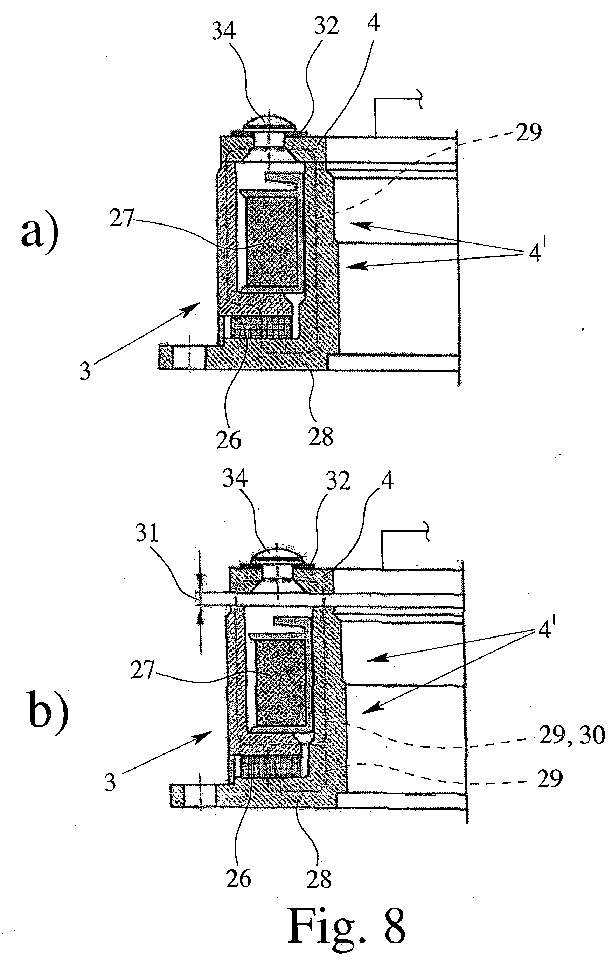

Wesentlich für die Ausgestaltung der in Fig. 5 dargestellten Bremsvorrichtung 3 ist zunächst die Tatsache, daß der Bremsantrieb 4' einen ein Magnetfeld erzeugenden Permanentmagneten 26 aufweist, wobei das vom Permanentmagneten 26 erzeugte Magnetfeld in noch zu erläuternder Weise eine Kraftwirkung auf die Bremse 4 in Richtung der Bremsstellung bewirkt. Dies ist in Fig. 8 dargestellt. Der Brernsantrieb 4' weist ferner einen Elektromagneten 27 auf, durch dessen Ansteuerung ebenfalls ein Magnetfeld erzeugbar ist. Die Anordnung ist nun so getroffen, daß je nach Polung des Elektromagneten 27 das vom Permanentmagneten 26 erzeugte Magnetfeld mittels des Elektromagneten 27 abschwächbar bzw. verstärkbar ist.

Aus der Überlagerung des vom Permanentmagneten 26 erzeugten Magnetfeldes mit dem vom Elektromagneten 27 erzeugten Magnetfeld ergibt sich ein resultierendes Magnetfeld, das eine resultierende Kraftwirkung auf die Bremse 4 bewirkt. Das resultierende Magnetfeld ist mittels des Elektromagneten 27 steuerbar.

In besonders bevorzugter Ausgestaltung sind der Bremsvorrichtung 3 drei unterschiedliche Bremszustände zugeordnet. In einem ersten Bremszustand ist der Elektromagnet 27 nicht angesteuert, so daß die Bremse 4 durch die Wirkung des vom Permanentmagneten 26 erzeugten Magnetfeldes in der Bremsstellung steht und eine erste Bremskraft ausübt. In einem zweiten Bremszustand ist der Elektromagnet 27 so angesteuert, daß eine Verstärkung der Bremskraft resultiert. Hierfür ist es notwendig, daß das vom Permanentmagneten 26 erzeugte Magnetfeld im wesentlichen ausgerichtet zu dem vom Elektromagneten 27 erzeugten Magnetfeld ist, so daß sich die magnetischen Feldstärken entsprechend addieren bzw. subtrahieren. In einem dritten Bremszustand wird der Elektromagnet 27 so angesteuert, daß die Bremse 4 in der Lüftstellung steht, also keine Bremskraft ausgeübt wird.

Mit "Ansteuerung" des Elektromagneten 27 ist die Beaufschlagung des Elektromagneten 27 mit einer entsprechenden Steuerspannung gemeint. Die Steuerspannung kann eine Gleichspannung sein oder aber einen bestimmten Spannungsverlauf aufweisen. Möglich ist auch eine gepulste Steuerspannung oder aber ein einziger Spannungsimpuls.

Die Anordnung ist so getroffen, daß im ersten Bremszustand die Bremskraft vorzugsweise etwa 50 % der maximalen Bremskraft beträgt und daß im zweiten Bremszustand die Bremskraft vorzugsweise etwa 100 % der maximalen Bremskraft beträgt.

Der besondere Vorteil der oben beschriebenen Bremsvorrichtung 3 mit drei Bremszuständen wird im folgenden anhand der Anwendung der Antriebsvorrichtung 1 für die Betätigung der Heckklappe 1" eines Kraftfahrzeugs erläutert.

Bei der motorischen Betätigung der Heckklappe 1" eines Kraftfahrzeugs ist die Abtriebswelle 6 des Planetengetriebes 2 über das Zahnrad 22 und weiter über ein Stellelement antriebstechnisch mit der Heckklappe 1" gekoppelt. Für die normale motorische Betätigung befindet sich die Bremsvorrichtung 3 im zweiten Bremszustand, so daß die Bremskraft vorzugsweise etwa 100 % der maximalen Bremskraft beträgt. Entsprechend ist bei der in Fig. 5 dargestellten Ausführungsform das Hohlrad 10 mit maximaler Bremskraft gebremst, so daß die Antriebswelle 5 mit der Abtriebswelle 6 gekuppelt ist.

Für die manuelle Betätigung der Heckklappe 1" wird die Bremsvorrichtung 3 in den dritten Bremszustand überführt, so daß die Bremse 4 in der Lüftstellung steht und keine Bremskraft ausübt. Dann ist der Kraftfluß zwischen der Antriebswelle 5 und der Abtriebswelle 6 unterbrochen und die Heckklappe 1" ist weitgehend frei manuell betätigbar.

Bei geöffneter Heckklappe 1" oder bei in einer Zwischenstellung befindlicher Heckklappe 1" muß diese, soweit nicht gerade ein Betätigungsvorgang läuft, in ihrer Stellung fixiert werden. Hierfür wird die Bremsvorrichtung 3 in den ersten Bremszustand überführt, in dem der Elektromagnet 27 nicht angesteuert ist. Dann bewirkt das vom Permanentmagneten 26 erzeugte Magnetfeld eine-reduzierte - Bremskraft, die aber gerade ausreicht, um die Heckklappe 1" in der jeweiligen Stellung zu halten. Ferner ist in diesem ersten Bremszustand eine manuelle Betätigung, wenn auch mit entsprechendem Kraftaufwand, möglich. In diesem Fall arbeitet die Bremsvorrichtung 3 gewissermaßen nach Art einer Rutschkupplung.

Besonders vorteilhaft ist bei der oben beschriebenen Ausgestaltung der Bremsvorrichtung 3 die Tatsache, daß bei einem Stromausfall, beispielsweise während der motorischen Betätigung der Heckklappe 1", sichergestellt ist, daß die Heckklappe 1" in der jeweils aktuellen Stellung fixiert wird. Ferner ist es vorteilhaft, daß trotz der Fixierung der Heckklappe 1" eine manuelle Betätigung, wenn auch mit entsprechendem Kraftaufwand, möglich ist.

Es gibt eine Reihe von Möglichkeiten der Ausgestaltung und Anordnung des Permanentmagneten 26 sowie des Elektromagneten 27. Auch kann die Ansteuerung des Elektromagneten 27 je nach Anwendungsfall unterschiedlich sein.

Bei der in Fig. 5 dargestellten Ausführungsform ist im zweiten Bremszustand die Ansteuerung des Elektromagneten 27 umgekehrt zu der Ansteuerung des Elektromagneten 27 im dritten Bremszustand. Die Umpolung des Elektromagnetens 27 bewirkt hier die Abschwächung oder Verstärkung des vom Permanentmagneten 26 erzeugten Magnetfeldes.
Im dritten Bremszustand ist es so, daß das vom Elektromagneten 27 erzeugte Magnetfeld entgegengesetzt zu dem vom Permanentmagneten 26 erzeugten Magnetfeld gerichtet ist und dieses im wesentlichen aufhebt. Dadurch ist gewährleistet, daß im dritten Bremszustand keine Bremskraft ausgeübt wird. Ggf. ist die Bremse 4 derart vorgespannt, daß durch den Wegfall des resultierenden Magnetfeldes die Bremse 4 in die Lüftstellung verstellt wird. Ein bevorzugtes Ausführungsbeispiel zur Realisierung einer derartigen Vorspannung wird im folgenden noch erläutert.
Fig. 8 zeigt die Bremsvorrichtung 3 der in Fig. 5 dargestellten Antriebsvorrichtung a) bei in der Bremsstellung befindlicher Bremse 4 und b) bei in der Lüftstellung befindlicher Bremse 4. Bei der dargestellten und insoweit bevorzugten Ausführungsform ist der Permanentmagnet 26 in einem Gehäuse 28 untergebracht, wobei das vom Permanentmagneten 26 erzeugte Magnetfeld das Gehäuse 28 zumindest zum Teil durchdringt. In dem Gehäuse 28 ist auch der Elektromagnet 27 untergebracht. Auch das vom Elektromagneten 27 erzeugte Magnetfeld durchdringt das Gehäuse 28 zumindest zum Teil. In Fig. 8 sind die Feldlinien 29 des vom Permanentmagneten 26 erzeugten Magnetfeldes sowie die Feldlinien 30 des vom Elektromagneten 27 erzeugten Magnetfeldes grob schematisch eingezeichnet. Dabei zeigt Fig. 8 in der Ansicht a) das allein vom Permanentmagneten 26 erzeugte Magnetfeld bei abgeschaltetem Elektromagneten 27 (erster Bremszustand). Die Ansicht b) in Fig. 8 zeigt die Abschwächung bzw. Aufhebung des vom Permanentmagneten 26 erzeugten Magnetfeldes (dritter Bremszustand).
Zur Gewährleistung der Bremsfunktion steht die in der Bremsstellung befindliche Bremse 4 mit dem Gehäuse 28 zur Bremsung bzw. Blockierung des dritten der Elemente Sonnenrad 7, Planetenradträger 8 und Hohlrad 10 in Eingriff.

Um die Verstellbarkeit der Bremse 4 mittels eines Magnetfeldes zu gewährleisten, ist die Bremse 4 zumindest zum Teil magnetisch oder magnetisierbar, wobei das vom Permanentmagneten 26 erzeugte Magnetfeld die in der Bremsstellung befindliche Bremse 4 zumindest zum Teil durchdringt.

Besondere Bedeutung kommt nun der Anordnung der Bremse 4 im Hinblick auf das Gehäuse 28 zu. In besonders bevorzugter Ausgestaltung weist der vom Permanentmagneten 26 erzeugte magnetische Kreis bei in der Lüftstellung befindlicher Bremse 4 (Fig. 8, Ansicht b)) einen Luftspalt 31 zwischen der Bremse 4 und dem Gehäuse 28 auf. Bei in der Bremsstellung befindlicher Bremse 4 ist dieser Luftspalt 31 geschlossen (Fig. 8, Ansicht a)). Die Bremse 4 bildet also gewissermaßen ein Joch für die Anordnung der Magnete 26, 27.

Je näher sich die Bremse 4 an das Gehäuse 28 annähert, desto stärker ist die durch das vom Permanentmagneten 26 erzeugte Magnetfeld bewirkte Kraftwirkung auf die Bremse 4 in Richtung der Bremsstellung, also auf das Gehäuse 28 zu. Die Kraftwirkung steht mit der Luftspaltbreite also in einem umgekehrten Zusammenhang. Dieser Zusammenhang läßt sich für eine besonders einfache Ansteuerung des Elektromagneten 27 ausnutzen, wie im folgenden noch gezeigt wird.

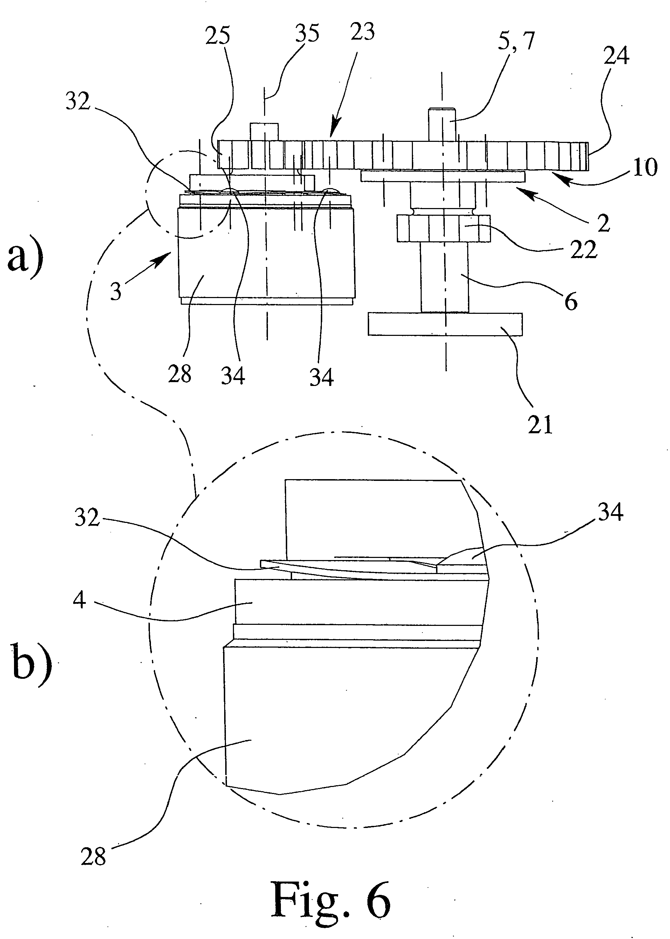

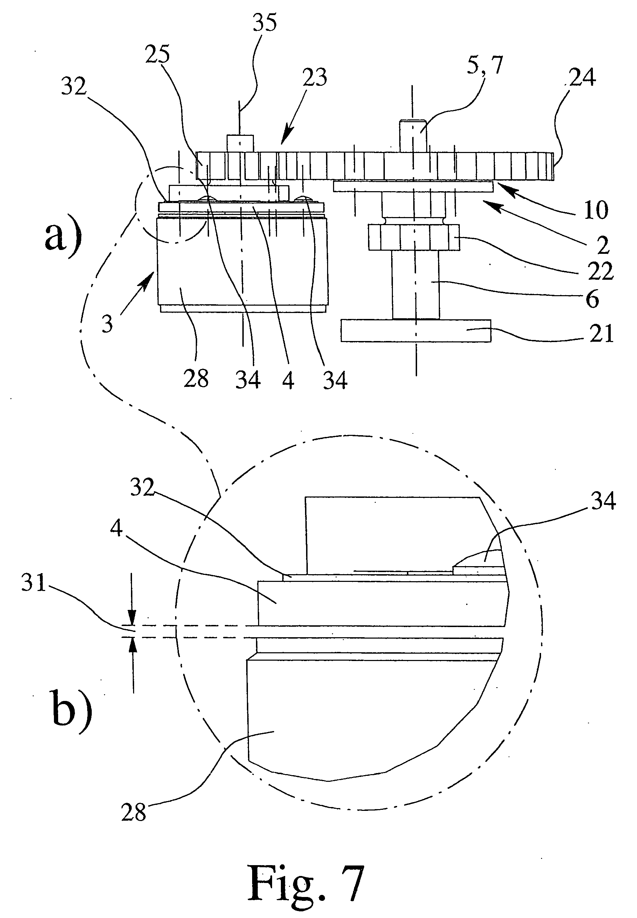

Bei einer besonders bevorzugten Ausführungsform weist die Bremsvorrichtung 3 ein Federelement 32 auf, das eine Vorspannung der Bremse 4 in die Lüftstellung bewirkt. Dies ist insbesondere in den Fig. 6, 7, jeweils in der Ansicht b), zu erkennen. Dabei sind der Permanentmagnet 26 einerseits und das Federelement 32 andererseits so ausgelegt, daß bei in der Bremsstellung (Fig. 6) befindlicher Bremse 4 die durch den Permanentmagneten 26 erzeugte Kraftwirkung auf die Bremse 4 die durch das Federelement 32 erzeugte Kraftwirkung auf die Bremse 4 überwiegt. Bei abgeschaltetem Elektromagneten 27 stellt die Bremsstellung also eine stabile Lage für die Bremse 4 dar.

Weiter bewirkt die obige Auslegung, daß bei in der Lüftstellung (Fig. 7) befindlicher Bremse 4 die durch das Federelement 32 erzeugte Kraftwirkung auf die Bremse 4 die durch den Permanentmagneten 26 erzeugte Kraftwirkung überwiegt. Damit stellt bei abgeschaltetem Elektromagneten 27 auch die Lüftstellung für die Bremse 4 eine stabile Lage dar. Für die Überführung der Bremsvorrichtung 3 vom ersten Bremszustand in den dritten Bremszustand ist also lediglich eine impulsartige Ansteuerung des Elektromagneten 27 über einen bestimmten Zeitraum erforderlich, bis die Bremse 4 in die Lüftstellung schnappt. Unter Berücksichtigung des oben angesprochenen Zusammenhangs zwischen Luftspaltbreite und Kraftwirkung auf die Bremse 4 ist eine entsprechende Auslegung ohne weiteres ermittelbar.

Für die Ausgestaltung des Federelements 32 sind eine Reihe von Möglichkeiten denkbar. Eine besonders bevorzugte und in den Fig. 6, 7 dargestellte Ausgestaltung sieht vor, das Federelement 32 als Tellerfeder auszugestalten.

Es läßt sich den Fig. 6 und 7 entnehmen, daß die Bremse 4 über das Federelement 32 an der Bremsvorrichtung 3 im übrigen aufgehangen ist. Hierfür ist das Federelement 32 über erste Befestigungspunkte 33 mit dem Zahnradelement 25 und über zweite Befestigungspunkte 34 mit der Bremse 4 verbunden. Die ersten und zweiten Befestigungspunkte 33, 34 sind über den Umfang des Federelements 32 derart versetzt, daß eine Verstellung der Bremse 4 von der Lüftstellung in die Bremsstellung zu einem elastischen Verbiegen des Federelements 32 führt. Das Zahnradelement 25 ist entsprechend in Richtung seiner Drehachse 35 festgesetzt. Dies wird durch einen Vergleich der Fig. 6 und 7 deutlich.

Bei der in den Fig. 6 und 7 dargestellten Ausführungsform ist die Verstellbewegung der Bremse 4 zwischen der Lüftstellung (Fig. 7) und der Bremsstellung (Fig. 6) eine Linearbewegung von etwa 0,6 mm. Je nach Ausgestaltung kann hier auch eine größere oder kleinere Bewegung vorgesehen sein.

Das Gehäuse 28 ist in bevorzugter Ausgestaltung feststehend ausgestaltet, wobei die Bremse 4 mit dem dritten der Elemente Sonnenrad 7, Planetenradträger 8 und Hohlrad 10 bewegungsgekoppelt ist. Es kann aber auch vorteilhaft sein, daß die Bremse 4, vorzugsweise unmittelbar, am dritten der Elemente Sonnenrad 7, Planetenradträger 8 und Hohlrad 10 angeordnet ist. Eine Möglichkeit könnte darin bestehen, daß die Bremse 4 über das Federelement 32 mit dem dritten der Elemente Sonnenrad 7, Planetenradträger 8 und Hohlrad 10 verbunden ist.

Es kann aber auch vorgesehen werden, daß das Gehäuse 28 am dritten der Elemente Sonnenrad 7, Planetenradträger 8 und Hohlrad 10 angeordnet ist oder einstückig mit diesem Element ausgeführt ist und daß die Bremse 4 entsprechend hinsichtlich der Verstellbewegung des dritten der Elemente Sonnenrad 7, Planetenradträger 8 und Hohlrad 10 feststehend ausgestaltet ist. Dann ist der Elektromagnet 27 ggf. ebenfalls feststehend und über einen Spalt magnetisch mit dem Gehäuse 28 gekoppelt.

Eine besonders platzsparende und gleichzeitig effektive Anordnung wird dadurch erreicht, daß der Permanentmagnet 26 ringförmig ausgestaltet ist. Es kann aber auch vorgesehen werden, daß das gewünschte Magnetfeld durch eine Mehrzahl einzelner Permanentmagneten 26 erzeugt wird. Der Elektromagnet 27 ist vorzugsweise als Spule ausgeführt, die konzentrisch zu dem Permanentmagneten 26 angeordnet ist. Das Gehäuse 28 weist vorzugsweise die Form einer Trommel auf.

Für alle oben beschriebenen Ausführungsformen darf, wie im einzelnen schon erläutert, darauf hingewiesen werden, daß die Bremse 4 als reibschlüssige Bremse oder aber als formschlüssige Bremse ausgestaltet sein kann. Bei der reibschlüssigen Bremse 4 ist die Bremse 4 selbst sowie das zu der Bremse 4 korrespondierende Element vorzugsweise mit einem entsprechenden Bremsbelag versehen. Bei der formschlüssigen Bremse 4 sind entsprechende, ineinandergreifende Strukturen vorgesehen. Ein Beispiel hierfür ist die Ausstattung der Bremse 4 mit einer verzahnten Oberfläche. Durch einen derartigen Formschluß kann mit geringem Aufwand eine hohe Bremswirkung erzielt werden. Bei der Ausstattung der Bremse 4 mit einer verzahnten Oberfläche läßt sich bei einem vorbestimmten Drehmoment zwischen der Antriebswelle 5 und der Abtriebswelle 6 ein gesteuertes "Durchrutschen" der Bremse 4 nach Art einer Überlastsicherung erreichen.

Bei der in Fig. 5 dargestellten Ausführungsform würde ausgehend vom ersten Bremszustand das obige "Durchrutschen" der Bremse 4 zu einer Überführung der Bremsvorrichtung 3 in den dritten Bremszustand führen. Bis zu der nächsten Ansteuerung des Elektromagneten 27 verbleibt die Bremse 4 dann in der Lüftstellung, die ja, wie oben beschrieben, eine stabile Lage für die Bremse 4 darstellt. Dieser Automatismus kann insbesondere im Hinblick auf die manuelle Betätigbarkeit sinnvoll sein.

Die Antriebsvorrichtung 1 weist hier und vorzugsweise ein Betätigungselement 20, insbesondere einen Türgriff auf. Sie ist dabei so ausgeführt, daß die Bremse 4 bei Betätigung des Betätigungselements 20 in ihre Lüftstellung bewegt wird. Die Betätigung des Betätigungselements 20 dient insofern als Zeichen für das Vorliegen eines Notfalls, so daß Antriebswelle 5 und Abtriebswelle 6 entkuppelt werden. Die Ausführung des Türgriffs als solches Betätigungselement 20 ist insofern besonders zweckmäßig, da die Betätigung des Türgriffs eine normale Reaktion in einem Notfall ist, beispielsweise wenn etwas in der Kraftfahrzeugtür 1' eingeklemmt ist.

Das Betätigungselement 20 an der Kraftfahrzeugtür 1' kann auch ein Türgriff sein, der bei einem ersten, leichten Betätigen lediglich den Antrieb der Kraftfahrzeugtür 1' einschaltet. Durch eine Steuerung geführt wird dann auch die Bremsvorrichtung 3 eingeschaltet. Erst ein weiteres oder kräftigeres Betätigen des Türgriffes kann dann für ein Abschalten der Bremsvorrichtung 3 und damit für ein Entkuppeln der Kraftfahrzeugtür 1' vom Antrieb genutzt werden.

Es darf schließlich darauf hingewiesen werden, daß alle obigen Antriebsvorrichtungen 1 für eine Vielzahl von Anwendungen geeignet sind. Besonders vorteilhaft ist allerdings der Einsatz für die motorische Betätigung der Schiebetür 1' oder der Heckklappe 1" bzw. des Kofferraumdeckels eines Kraftfahrzeugs.

Bei der motorischen Betätigung der Heckklappe 1" bzw. des Kofferraumdekkels eines Kraftfahrzeugs ist die Abtriebswelle 6 des Planetengetriebes 2 vorzugsweise mit einem Stellelement gekoppelt, das eine Betätigungsbewegung über eine Schubstange o. dgl. auf die Heckklappe 1" überträgt. Insoweit darf auf eine von der Anmelderin zeitgleich beim Deutschen Patent- und Markenamt eingereichte Anmeldung verwiesen werden, deren Inhalt in vollem Umfang zum Gegenstand dieser Anmeldung gemacht wird. Die zeitgleiche Anmeldung betrifft eine Antriebsanordnung zur Betätigung der Klappe eines Kraftfahrzeugs mit einem Antrieb und einem nachgeschalteten Getriebe, wobei das Getriebe ein obiges Stellelement sowie eine entsprechende Schubstange aufweist. Auf die dortigen Ausführungen darf verwiesen werden.

## Patentansprüche

1. Antriebsvorrichtung für eine motorisch verstellbare Kraftfahrzeugtür (1') oder -klappe, mit einem Planetengetriebe (2) und einer Bremsvorrichtung (3) mit einer Bremse (4),
wobei das Planetengetriebe (2) eine Antriebswelle (5), eine Abtriebswelle (6), ein Sonnenrad (7), einen Planetenradträger (8) mit Planetenrädern (9) und ein Hohlrad (10) aufweist,
wobei die Antriebswelle (5) motorisch antreibbar ist und wobei die Abtriebswelle (6) mit der Kraftfahrzeugtür (1') oder -klappe antriebstechnisch gekoppelt ist,
wobei eines der Elemente Sonnenrad (7), Planetenradträger (8) und Hohlrad (10) mit der Antriebswelle (5) gekoppelt ist, ein zweites der Elemente Sonnenrad (7), Planetenradträger (8) und Hohlrad (10) mit der Abtriebswelle (6) gekoppelt ist und das dritte der Elemente Sonnenrad (7), Planetenradträger (8) und Hohlrad (10) mittels der Bremse (4) bremsbar bzw. blockierbar ist, wobei das dritte der Elemente Sonnenrad (7), Planetenradträger (8) und Hohlrad (10) in einer ersten Stellung der Bremse (4) - Lüftstellung - nicht gebremst bzw. blockiert ist und in dieser Stellung die Antriebswelle (5) und die Abtriebswelle (6) nicht miteinander gekuppelt und die Kraftfahrzeugtür (1') oder -klappe von Hand unbehindert von der Antriebsvorrichtung verstellbar ist und
wobei das dritte der Elemente Sonnenrad (7), Planetenradträger (8) und Hohlrad (10) in einer zweiten Stellung der Bremse (4) - Bremsstellung - gebremst bzw. blockiert ist und dadurch die Antriebswelle (5) mit der Abtriebswelle (6) gekuppelt ist, so daß in dieser Stellung die Kraftfahrzeugtür (1') oder -klappe motorisch verstellbar ist,
wobei die Bremsvorrichtung (3) einen von dem die Antriebswelle (5) antreibenden Antrieb separaten, steuerbaren Bremsantrieb (4') für die Bremse (4) aufweist und wobei die Bremse (4) mittels des Bremsantriebs (4') zumindest von einer der beiden Stellungen in die andere der beiden Stellungen verstellbar ist,
**dadurch gekennzeichnet,**
**daß** die Bremse (4) über ein weiteres Getriebe (23) mit dem dritten der Elemente Sonnenrad (7), Planetenradträger (8) und Hohlrad (10) für dessen Bremsung bzw. Blockierung gekoppelt ist.

2. Antriebsvorrichtung nach Anspruch 1, **dadurch gekennzeichnet, daß** die Bremse (4) von der Lüftstellung in die Bremsstellung mittels des Bremsantriebs (4') und von der Bremsstellung in die Lüftstellung unter Federkraft verstellbar ist.

3. Antriebsvorrichtung nach Anspruch 1 oder 2, **dadurch gekennzeichnet, daß** die Bremse (4) von der Lüftstellung in die Bremsstellung und von der Bremsstellung in die Lüftstellung mittels des Bremsantriebs (4') verstellbar ist.

4. Antriebsvorrichtung nach einem der Ansprüche 1 bis 3, **dadurch gekennzeichnet, daß** die Bremse (4) in der Bremsstellung durch Formschluß und/oder durch den Bremsantrieb (4') gehalten wird.

5. Antriebsvorrichtung nach einem der Ansprüche 1 bis 4, **dadurch gekennzeichnet, daß** die Bremse (4) von der Bremsstellung in die Lüftstellung mittels des Bremsantriebs (4') und von der Lüftstellung in die Bremsstellung unter Federkraft verstellbar ist.

6. Antriebsvorrichtung nach Anspruch 5, **dadurch gekennzeichnet, daß** die Bremse (4) in der Lüftstellung durch Formschluß und/oder durch den Bremsantrieb (4') gehalten wird.

7. Antriebsvorrichtung nach einem der Ansprüche 1 bis 6, **dadurch gekennzeichnet, daß** das Sonnenrad (7) das erste der Elemente Sonnenrad (7), Planetenradträger (8) und Hohlrad (10) ist, daß der Planetenradträger (8) das zweite der Elemente Sonnenrad (7), Planetenradträger (8) und Hohlrad (10) ist und daß das Hohlrad (10) das dritte der Elemente Sonnenrad (7), Planetenradträger (8) und Hohlrad (10) ist.

8. Antriebsvorrichtung nach einem der Ansprüche 1 bis 7, **dadurch gekennzeichnet, daß** die Antriebswelle (5) mittels eines Getriebes (17), vorzugsweise eines Schneckengetriebes angetrieben wird.

9. Antriebsvorrichtung nach Anspruch 8, **dadurch gekennzeichnet, daß** das Getriebe (17) zum Antreiben der Antriebswelle (5) mit Selbsthemmung ausgeführt ist.

10. Antriebsvorrichtung nach einem der Ansprüche 1 bis 9, **dadurch gekennzeichnet, daß** die Bremse (4) der Bremsvorrichtung (3) als Backenbremse oder als Scheibenbremse ausgeführt ist.

11. Antriebsvorrichtung nach einem der Ansprüche 1 bis 10, **dadurch gekennzeichnet, daß** die Bremse (4) der Bremsvorrichtung (3) als formschlüssige Bremse (4) oder als formreibschlüssige Bremse (4) ausgestaltet ist, vorzugsweise, daß die Bremse (4) hierfür eine entsprechende Verzahnung o. dgl. aufweist.

12. Antriebsvorrichtung nach einem der Ansprüche 1 bis 11, **dadurch gekennzeichnet, daß** die Bremsvorrichtung (3) mit Selbsthemmung ausgeführt ist, oder, daß die Bremsvorrichtung (3) ohne Selbsthemmung ausgeführt ist.

13. Antriebsvorrichtung nach einem der Ansprüche 1 bis 12, **dadurch gekennzeichnet, daß** der Bremsantrieb (4') der Bremse (4) einen Elektromotor (16) und ein Getriebe (17) aufweist, vorzugsweise, daß das Getriebe (17) als Schneckengetriebe ausgeführt ist.

14. Antriebsvorrichtung nach einem der Ansprüche 1 bis 13, **dadurch gekennzeichnet, daß** die Bremsvorrichtung (3) so ausgeführt und gesteuert ist, daß der Bremsantrieb (4') nur so lange angetrieben wird, bis die Bremse (4) die Bremsstellung und/oder die Lüftstellung erreicht.

15. Antriebsvorrichtung nach einem der Ansprüche 1 bis 14, **dadurch gekennzeichnet, daß** die Bremsvorrichtung (3) so ausgeführt und gesteuert ist, daß der Antrieb (4') während des gesamten Bremsvorgangs und/oder während des gesamten Lüftvorgangs angetrieben wird.

16. Antriebsvorrichtung nach einem der Ansprüche 1 bis 15, **dadurch gekennzeichnet, daß** der Bremsantrieb (4') als Solenoid (18) ausgeführt ist.

17. Antriebsvorrichtung nach einem der Ansprüche 1 bis 16, **dadurch gekennzeichnet, daß** das weitere Getriebe (23) ein Stirnradgetriebe, ein Planetengetriebe ein Zahnriemen, eine Getriebekette o. dgl. ist, vorzugsweise, daß ein mit dem dritten der Elemente Sonnenrad (7), Planetenradträger (8) und Hohlrad (10) in antriebstechnischem Eingriff stehendes und mit der Bremse (4) verbundenes Zahnradelement (25) vorgesehen ist.

18. Antriebsvorrichtung nach einem der Ansprüche 1 bis 17, **dadurch gekennzeichnet, daß** der Bremsantrieb (4') einen ein Magnetfeld erzeugenden Permanentmagneten (26) aufweist, daß das vom Permanentmagneten (26) erzeugte Magnetfeld eine Kraftwirkung auf die Bremse (4) in Richtung der Bremsstellung bewirkt, daß der Bremsantrieb (4') einen Elektromagneten (27) aufweist, daß durch die Ansteuerung des Elektromagneten (27) ein Magnetfeld erzeugbar ist und daß je nach Polung des Elektromagneten (27) das vom Permanentmagneten (26) erzeugte Magnetfeld mittels des Elektromagneten (27) abschwächbar bzw. verstärkbar ist.

19. Antriebsvorrichtung nach Anspruch 18, **dadurch gekennzeichnet, daß** in einem ersten Bremszustand der Elektromagnet (27) nicht angesteuert ist und die Bremse (4) durch die Wirkung des vom Permanentmagneten (27) erzeugten Magnetfelds in der Bremsstellung steht und eine erste Bremskraft ausübt, daß in einem zweiten Bremszustand der Elektromagnet (27) so angesteuert ist, daß eine Verstärkung der Bremskraft resultiert und daß in einem dritten Bremszustand der Elektromagnet (27) so angesteuert ist, daß die Bremse (4) in der Lüftstellung steht,
vorzugsweise, daß im ersten Bremszustand die Bremskraft etwa 50% der maximalen Bremskraft beträgt und daß im zweiten Bremszustand die Bremskraft etwa 100% der maximalen Bremskraft beträgt.

20. Antriebsvorrichtung nach Anspruch 19, **dadurch gekennzeichnet, daß** im zweiten Bremszustand die Ansteuerung des Elektromagneten (27) umgekehrt zu der Ansteuerung des Elektromagneten (27) im dritten Bremszustand ist.

21. Antriebsvorrichtung nach Anspruch 19 oder 20, **dadurch gekennzeichnet, daß** im dritten Bremszustand das vom Elektromagneten (27) erzeugte Magnetfeld entgegengesetzt zu dem vom Permanentmagneten (26) erzeugten Magnetfeld gerichtet ist und dieses im wesentlichen aufhebt.

22. Antriebsvorrichtung nach einem der Ansprüche 18 bis 21, **dadurch gekennzeichnet, daß** der Permanentmagnet (26) in einem Gehäuse (28) untergebracht ist und daß das vom Permanentmagneten (26) erzeugte Magnetfeld das Gehäuse (28) zumindest zum Teil durchdringt, vorzugsweise, daß der Elektromagnet (27) in dem Gehäuse (28) untergebracht ist und daß das vom Elektromagneten (27) erzeugte Magnetfeld das Gehäuse (28) zumindest zum Teil durchdringt.

23. Antriebsvorrichtung nach einem der Ansprüche 18 bis 22, **dadurch gekennzeichnet, daß** die Bremse (4) zumindest zum Teil magnetisch oder magnetisierbar ist und daß das vom Permanentmagneten (26) erzeugte Magnetfeld die in der Bremsstellung befindliche Bremse (4) zumindest zum Teil durchdringt.

24. Antriebsvorrichtung nach einem der Ansprüche 18 bis 23, **dadurch gekennzeichnet, daß** der dem Permanentmagneten (26) zugehörige magnetische Kreis bei in der Lüftstellung befindlicher Bremse (4) einen Luftspalt (31) zwischen der Bremse (4) und dem Gehäuse (28) aufweist und daß bei in der Bremsstellung befindlicher Bremse (4) der Luftspalt (31) geschlossen ist.

25. Antriebsvorrichtung nach einem der Ansprüche 18 bis 24, **dadurch gekennzeichnet, daß** die Bremsvorrichtung (3) ein Federelement (32) aufweist, daß das Federelement (32) eine Vorspannung der Bremse (4) in die Lüftstellung bewirkt und daß der Permanentmagnet (26) einerseits und das Federelement (32) andererseits so ausgelegt sind, daß bei in der Bremsstellung befindlicher Bremse (4) die durch den Permanentmagneten (26) erzeugte Kraftwirkung auf die Bremse (4) die durch das Federelement (32) erzeugte Kraftwirkung auf die Bremse (4) überwiegt und daß bei in der Lüftstellung befindlicher Bremse (4) die durch das Federelement (32) erzeugte Kraftwirkung auf die Bremse (4) die durch den Permanentmagneten (26) erzeugte Kraftwirkung überwiegt, vorzugsweise, daß das Federelement (32) als Tellerfeder ausgestaltet ist und daß die Bremse (4) über das Federelement (32) an der Bremsvorrichtung (3) im übrigen aufgehangen ist.

26. Antriebsvorrichtung nach einem der Ansprüche 18 bis 25, **dadurch gekennzeichnet, daß** die Bremse (4) mit dem dritten der Elemente Sonnenrad (7), Planetenradträger (8) und Hohlrad (10) für dessen Bremsung bzw. Blokkierung über ein weiteres Getriebe (23) gekoppelt ist und daß hierfür ein mit dem dritten der Elemente Sonnenrad (7), Planetenradträger (8) und Hohlrad (10) in antriebstechnischem Eingriff stehendes und mit der Bremse (4) verbundenes Zahnradelement (25) vorgesehen ist.

27. Antriebsvorrichtung nach einem der Ansprüche 18 bis 26, **dadurch gekennzeichnet, daß** die Verstellbewegung der Bremse (4) zwischen der Lüftstellung und der Bremsstellung eine Linearbewegung von etwa 0,6 mm ist.

28. Antriebsvorrichtung nach einem der Ansprüche 18 bis 27, **dadurch gekennzeichnet, daß** der Permanentmagnet (26) aus mehreren Permanentmagneten (26) zusammengesetzt ist.

29. Antriebsvorrichtung nach einem der Ansprüche 1 bis 28, **dadurch gekennzeichnet, daß** ein Betätigungselement (20) vorgesehen ist und daß die Bremsvorrichtung (3) so ausgeführt ist, daß die Bremse (4) bei Betätigung des Betätigungselements (20) in ihre Lüftstellung bewegt wird.

30. Antriebsvorrichtung nach einem der Ansprüche 1 bis 29, **dadurch gekennzeichnet, daß** die Antriebsvorrichtung (1) für die Betätigung der Schiebetür (1'), der Heckklappe (1") oder des Kofferraumdeckels eines Kraftfahrzeugs ausgelegt ist.

## Claims

1. Drive apparatus for a motor vehicle door (1') or lid which can be adjusted by motor, having a planetary gear mechanism (2) and a braking apparatus (3) with a brake (4), the planetary gear mechanism (2) having a drive shaft (5), an output shaft (6), a sun gear (7), a planetary gear carrier (8) with planetary gears (9), and an internal gear (10), it being possible for the drive shaft (5) to be driven by motor, and the output shaft (6) being coupled in drive terms to the motor vehicle door (1') or lid, one of the elements sun gear (7), planetary gear carrier (8) and internal gear (10) being coupled to the drive shaft (5), a second of the elements sun gear (7), planetary gear carrier (8) and internal gear (10) being coupled to the output shaft (6), and it being possible for the third of the elements sun gear (7), planetary gear carrier (8) and internal gear (10) to be braked or blocked by means of the brake (4), the third of the elements sun gear (7), planetary gear carrier (8) and internal gear (10) not being braked or blocked in a first position of the brake (4) (release position) and, in the said position, the drive shaft (5) and the output shaft (6) not being coupled to one another and it being possible for the motor vehicle door (1') or lid to be adjusted by hand in a manner which is unimpeded by the drive apparatus, and the third of the elements sun gear (7), planetary gear carrier (8) and internal gear (10) being braked or blocked in a second position of the brake (4) (brake position) and the drive shaft (5) being coupled to the output shaft (6) as a result, with the result that the motor vehicle door (1') or lid can be adjusted by motor in the said position, the braking apparatus (3) having a controllable brake drive (4') for the brake (4), which brake drive (4') is separate from the drive which drives the drive shaft (5), and it being possible for the brake (4) to be adjusted by means of the brake drive (4') at least from one of the two positions into the other of the two positions, **characterized in that** the brake (4) is coupled via a further gear mechanism (23) to the third of the elements sun gear (7), planetary gear carrier (8) and internal gear (10) in order to brake or block it.

2. Drive apparatus according to Claim 1, **characterized in that** the brake (4) can be adjusted from the release position into the brake position by means of the brake drive (4') and from the brake position into the release position under spring force.

3. Drive apparatus according to Claim 1 or 2, **characterized in that** the brake (4) can be adjusted from the release position into the brake position and from the brake position into the release position by means of the brake drive (4').

4. Drive apparatus according to one of Claims 1 to 3, **characterized in that** the brake (4) is held in the brake position by way of a positively locking connection and/or by way of the brake drive (4').

5. Drive apparatus according to one of Claims 1 to 4, **characterized in that** the brake (4) can be adjusted from the brake position into the release position by means of the brake drive (4') and from the release position into the brake position under spring force.

6. Drive apparatus according to Claim 5, **characterized in that** the brake (4) is held in the release position by way of a positively locking connection and/or by way of the brake drive (4').

7. Drive apparatus according to one of Claims 1 to 6, **characterized in that** the sun gear (7) is the first of the elements sun gear (7), planetary gear carrier (8) and internal gear (10), **in that** the planetary gear carrier (8) is the second of the elements sun gear (7), planetary gear carrier (8) and internal gear (10), and **in that** the internal gear (10) is the third of the elements sun gear (7), planetary gear carrier (8) and internal gear (10).

8. Drive apparatus according to one of Claims 1 to 7, **characterized in that** the drive shaft (5) is driven by means of a gear mechanism (17), preferably a worm gear mechanism.

9. Drive apparatus according to Claim 8, **characterized in that** the gear mechanism (17) for driving the drive shaft (5) is configured with a self-locking action.

10. Drive apparatus according to one of Claims 1 to 9, **characterized in that** the brake (4) of the braking apparatus (3) is configured as a shoe brake or as a disc brake.

11. Drive apparatus according to one of Claims 1 to 10, **characterized in that** the brake (4) of the braking apparatus (3) is configured as a positively locking brake (4) or as a positively frictionally locking brake (4), and preferably **in that** the brake (4) has a corresponding toothing system or the like for this purpose.

12. Drive apparatus according to one of Claims 1 to 11, **characterized in that** the braking apparatus (3) is configured with a self-locking action, or **in that** the braking apparatus (3) is configured without a self-locking action.

13. Drive apparatus according to one of Claims 1 to 12, **characterized in that** the brake drive (4') of the brake (4) has an electric motor (16) and a gear mechanism (17), and preferably **in that** the gear mechanism (17) is configured as a worm gear mechanism.

14. Drive apparatus according to one of Claims 1 to 13, **characterized in that** the braking apparatus (3) is configured and controlled in such a way that the brake drive (4') is driven only until the brake (4) reaches the brake position and/or the release position.

15. Drive apparatus according to one of Claims 1 to 14, **characterized in that** the braking apparatus (3) is configured and controlled in such a way that the drive (4') is driven during the entire braking operation and/or during the entire releasing operation.

16. Drive apparatus according to one of Claims 1 to 15, **characterized in that** the brake drive (4') is configured as a solenoid (18).

17. Drive apparatus according to one of Claims 1 to 16, **characterized in that** the further gear mechanism (23) is a spur gear mechanism, a planetary gear mechanism, a toothed belt, a gear train or the like, and preferably **in that** a gearwheel element (25) is provided which is in engagement in drive terms with the third of the elements sun gear (7), planetary gear carrier (8) and internal gear (10) and is connected to the brake (4).

18. Drive apparatus according to one of claims 1 to 17, **characterized in that** the brake drive (4') has a permanent magnet (26) which generates a magnetic field, **in that** the magnetic field which is generated by the permanent magnet (26) brings about an action of force on the brake (4) in the direction of the brake position, **in that** the brake drive (4') has an electromagnet (27), **in that** a magnetic field can be generated by way of the actuation of the electromagnet (27), and **in that**, depending on the polarity of the electromagnet (27), the magnetic field which is generated by the permanent magnet (26) can be weakened or strengthened by means of the electromagnet (27).

19. Drive apparatus according to Claim 18, **characterized in that**, in a first braking state, the electromagnet (27) is not actuated and the brake (4) lies in the brake position as a result of the action of the magnetic field which is generated by the permanent magnet (27) and exerts a first braking force, **in that**, in a second braking state, the electromagnet (27) is actuated in such a way that strengthening of the braking force results, and **in that**, in a third braking state, the electromagnet (27) is actuated in such a way that the brake (4) lies in the release position, and preferably **in that**, in the first braking state, the braking force is approximately 50% of the maximum braking force, and **in that**, in the second braking state, the braking force is approximately 100% of the maximum braking force.

20. Drive apparatus according to Claim 19, **characterized in that**, in the second braking state, the actuation of the electromagnet (27) is the other way round to the actuation of the electromagnet (27) in the third braking state.

21. Drive apparatus according to Claim 19 or 20, **characterized in that**, in the third braking state, the magnetic field which is generated by the electromagnet (27) is directed in the opposite direction to the magnetic field which is generated by the permanent magnet (26), and cancels the latter out substantially.

22. Drive apparatus according to one of Claims 18 to 21, **characterized in that** the permanent magnet (26) is accommodated in a housing (28), and **in that** the magnetic field which is generated by the permanent magnet (26) penetrates the housing (28) at least partially, and preferably **in that** the electromagnet (27) is accommodated in the housing (28), and **in that** the magnetic field which is generated by the electromagnet (27) penetrates the housing (28) at least partially.

23. Drive apparatus according to one of Claims 18 to 22, **characterized in that** the brake (4) is at least partially magnetic or can be magnetized, and **in that** the magnetic field which is generated by the permanent magnet (26) at least partially penetrates the brake (4) which is situated in the brake position.

24. Drive apparatus according to one of Claims 18 to 23, **characterized in that** the magnetic circuit which belongs to the permanent magnet (26) has an air gap (31) between the brake (4) and the housing (28) when the brake (4) is situated in the release position, and **in that** the air gap (31) is closed when the brake (4) is situated in the brake position.

25. Drive apparatus according to one of Claims 18 to 24, **characterized in that** the braking apparatus (3) has a spring element (32), **in that** the spring element (32) brings about a prestress of the brake (4) into the release position, and **in that** the permanent magnet (26) firstly and the spring element (32) secondly are designed in such a way that, when the brake (4) is situated in the brake position, the action of force on the brake (4) which is generated by the permanent magnet (26) outweighs the action of force on the brake (4) which is generated by the spring element (32), and **in that**, when the brake (4) is situated in the release position, the action of force on the brake (4) which is generated by the spring element (32) outweighs the action of force which is generated by the permanent magnet (26), and preferably **in that** the spring element (32) is configured as a disc spring, and **in that** the brake (4) is otherwise suspended on the braking apparatus (3) via the spring element (32).

26. Drive apparatus according to one of Claims 18 to 25, **characterized in that** the brake (4) is coupled via a further gear mechanism (23) to the third of the elements sun gear (7), planetary gear carrier (8) and internal gear (10) for braking or blocking it, and **in that** a gearwheel element (25) is provided for this purpose which is in engagement in drive terms with the third of the elements sun gear (7), planetary gear carrier (8) and internal gear (10) and is connected to the brake (4).

27. Drive apparatus according to one of Claims 18 to 26, **characterized in that** the adjusting movement of the brake (4) between the release position and the brake position is a linear movement of approximately 0.6 mm.

28. Drive apparatus according to one of Claims 18 to 27, **characterized in that** the permanent magnet (26) is assembled from a plurality of permanent magnets (26).

29. Drive apparatus according to one of Claims 1 to 28, **characterized in that** an actuating element (20) is provided, and **in that** the braking apparatus (3) is configured in such a way that the brake (4) is moved into its release position upon actuation of the actuating element (20).

30. Drive apparatus according to one of Claims 1 to 29, **characterized in that** the drive apparatus (1) is designed for actuating the sliding door (1'), the tailgate (1") or the boot lid of a motor vehicle.

## Revendications

1. Dispositif d'entraînement pour une porte (1') ou un hayon de véhicule automobile déplaçable par un moteur, avec un engrenage planétaire (2) et un dispositif de frein (3) avec un frein (4),
dans lequel l'engrenage planétaire (2) présente un arbre d'entraînement (5), un arbre de sortie (6), une roue solaire (7), un porte-satellites (8) avec des satellites (9) et une couronne (10),
dans lequel l'arbre d'entraînement (5) peut être entraîné par un moteur et dans lequel l'arbre de sortie (6) est couplé en entraînement à la porte (1') ou au hayon de véhicule automobile,
dans lequel un des éléments roue solaire (7), porte-satellites (8) et couronne (10) est couplé à l'arbre d'entraînement (5), un deuxième des éléments roue solaire (7), porte-satellites (8) et couronne (10) est couplé à l'arbre de sortie (6), et le troisième des éléments roue solaire (7), porte-satellites (8) et couronne (10) peut être freiné ou bloqué au moyen du frein (4),
dans lequel le troisième des éléments roue solaire (7), porte-satellites (8) et couronne (10) n'est pas freiné ou bloqué dans une première position du frein (4) - position desserrée - et dans cette position l'arbre d'entraînement (5) et l'arbre de sortie (6) ne sont pas couplés l'un à l'autre et la porte (1') ou le hayon de véhicule automobile peut être déplacé(e) à la main sans gêne par le dispositif d'entraînement, et
dans lequel le troisième des éléments roue solaire (7), porte-satellites (8) et couronne (10) est freiné ou bloqué dans une deuxième position du frein (4) - position de freinage - et de ce fait l'arbre d'entraînement (5) est couplé à l'arbre de sortie (6), de telle manière que dans cette position la porte (1') ou le hayon de véhicule automobile soit déplaçable par un moteur,
dans lequel le dispositif de frein (3) présente un entraînement de frein réglable (4') pour le frein (4), séparé de l'entraînement entraînant l'arbre d'entraînement (5) et dans lequel le frein (4) peut être déplacé au moyen de l'entraînement de frein (4') au moins d'une des deux positions à l'autre des deux positions,
**caractérisé en ce que** le frein (4) est couplé au moyen d'un autre engrenage (23) au troisième des éléments roue solaire (7), porte-satellites (8) et couronne (10), pour son freinage ou son blocage.

2. Dispositif d'entraînement selon la revendication 1, **caractérisé en ce que** le frein (4) peut être déplacé de la position desserrée à la position de freinage au moyen de l'entraînement de frein (4') et de la position de freinage à la position desserrée sous une force de ressort.

3. Dispositif d'entraînement selon la revendication 1 ou 2, **caractérisé en ce que** le frein (4) peut être déplacé de la position desserrée à la position de freinage et de la position de freinage à la position desserrée au moyen de l'entraînement de frein (4').

4. Dispositif d'entraînement selon l'une quelconque des revendications 1 à 3, **caractérisé en ce que** le frein (4) est maintenu dans la position de freinage par emboîtement et/ou par l'entraînement de frein (4').

5. Dispositif d'entraînement selon l'une quelconque des revendications 1 à 4, **caractérisé en ce que** le frein (4) peut être déplacé de la position de freinage à la position desserrée au moyen de l'entraînement de frein (4') et de la position desserrée à la position de freinage sous une force de ressort.

6. Dispositif d'entraînement selon la revendication 5, **caractérisé en ce que** le frein (4) est maintenu dans la position desserrée par emboîtement et/ou par l'entraînement de frein (4').

7. Dispositif d'entraînement selon l'une quelconque des revendications 1 à 6, **caractérisé en ce que** la roue solaire (7) est le premier des éléments roue solaire (7), porte-satellites (8) et couronne (10), **en ce que** le porte-satellites (8) est le deuxième des éléments roue solaire (7), porte-satellites (8) et couronne (10), et **en ce que** la couronne (10) est le troisième des éléments roue solaire (7), porte-satellites (8) et couronne (10).

8. Dispositif d'entraînement selon l'une quelconque des revendications 1 à 7, **caractérisé en ce que** l'arbre d'entraînement (5) est entraîné au moyen d'un engrenage (17), de préférence un engrenage à vis sans fin.

9. Dispositif d'entraînement selon la revendication 8, **caractérisé en ce que** l'engrenage (17) pour l'entraînement de l'arbre d'entraînement (5) est équipé d'un blocage automatique.

10. Dispositif d'entraînement selon l'une quelconque des revendications 1 à 9, **caractérisé en ce que** le frein (4) du dispositif de frein (3) est un frein à mâchoires ou un frein à disque.

11. Dispositif d'entraînement selon l'une quelconque des revendications 1 à 10, **caractérisé en ce que** le frein (4) du dispositif de frein (3) est un frein (4) à emboîtement ou un frein (4) à emboîtement-frottement, de préférence **en ce que** le frein (4) présente à cet effet une denture correspondante ou analogue.

12. Dispositif d'entraînement selon l'une quelconque des revendications 1 à 11, **caractérisé en ce que** le dispositif de frein (3) est équipé d'un blocage automatique, ou **en ce que** le dispositif de frein (3) est réalisé sans blocage automatique.

13. Dispositif d'entraînement selon l'une quelconque des revendications 1 à 12, **caractérisé en ce que** l'entraînement de frein (4') du frein (4) présente un moteur électrique (16) et un engrenage (17), de préférence **en ce que** l'engrenage (17) est un engrenage à vis sans fin.

14. Dispositif d'entraînement selon l'une quelconque des revendications 1 à 13, **caractérisé en ce que** le dispositif de frein (3) est réalisé et commandé de telle manière que l'entraînement de frein (4') ne soit entraîné que jusqu'à ce que le frein (4) atteigne la position de freinage et/ou la position desserrée.

15. Dispositif d'entraînement selon l'une quelconque des revendications 1 à 14, **caractérisé en ce que** le dispositif de frein (3) est réalisé et commandé de telle manière que l'entraînement (4') soit entraîné pendant toute l'opération de freinage et/ou pendant toute l'opération de desserrage.

16. Dispositif d'entraînement selon l'une quelconque des revendications 1 à 15, **caractérisé en ce que** l'entraînement de frein (4') est réalisé sous forme de solénoïde (18).

17. Dispositif d'entraînement selon l'une quelconque des revendications 1 à 16, **caractérisé en ce que** l'autre engrenage (23) est un engrenage droit, un engrenage planétaire, une courroie dentée, une chaîne d'engrenage ou analogue, de préférence **en ce qu'**il est prévu un élément de roue dentée (25) se trouvant en prise d'entraînement avec le troisième des éléments roue solaire (7), porte-satellites (8) et couronne (10) et relié au frein (4).

18. Dispositif d'entraînement selon l'une quelconque des revendications 1 à 17, **caractérisé en ce que** l'entraînement de frein (4') présente un aimant permanent (26) produisant un champ magnétique, **en ce que** le champ magnétique produit par l'aimant permanent (26) exerce un effet de force sur le frein (4) en direction de la position de freinage, **en ce que** l'entraînement de frein (4') présente un électroaimant (27), **en ce qu'**un champ magnétique peut être produit par l'activation de l'électroaimant (27) et **en ce que**, selon la polarité de l'électroaimant (27), le champ magnétique produit par l'aimant permanent (26) peut être affaibli ou renforcé par l'électroaimant (27).

19. Dispositif d'entraînement selon la revendication 18, **caractérisé en ce que** dans un premier état du frein l'électroaimant (27) n'est pas activé et le frein (4) se trouve dans la position de freinage par l'action du champ magnétique produit par l'aimant permanent (27) et exerce une première force de freinage, **en ce que** dans un deuxième état du frein l'électroaimant (27) est activé de telle manière qu'il en résulte une amplification de la force de freinage et **en ce que** dans un troisième état du frein l'électroaimant (27) est activé de telle manière que le frein (4) se trouve dans la position desserrée, de préférence **en ce que** dans le premier état du frein la force de freinage vaut environ 50 % de la force de freinage maximale et **en ce que** dans le deuxième état du frein la force de freinage vaut environ 100% de la force de freinage maximale.

20. Dispositif d'entraînement selon la revendication 19, **caractérisé en ce que** dans le deuxième état du frein l'activation de l'électroaimant (27) est l'inverse de l'activation de l'électroaimant (27) dans le troisième état du frein.

21. Dispositif d'entraînement selon la revendication 19 ou 20, **caractérisé en ce que** dans le troisième état du frein le champ magnétique produit par l'électroaimant (27) est orienté en opposition au champ magnétique produit par l'aimant permanent (26) et annule essentiellement celui-ci.

22. Dispositif d'entraînement selon l'une quelconque des revendications 18 à 21, **caractérisé en ce que** l'aimant permanent (26) est installé dans un boîtier (28) et **en ce que** le champ magnétique produit par l'aimant permanent (26) traverse au moins en partie le boîtier (28), de préférence **en ce que** l'électroaimant (27) est installé dans le boîtier (28) et **en ce que** le champ magnétique produit par l'électroaimant (27) traverse au moins en partie le boîtier (28).

23. Dispositif d'entraînement selon l'une quelconque des revendications 18 à 22, **caractérisé en ce que** le frein (4) est au moins en partie magnétique ou magnétisable et **en ce que** le champ magnétique produit par l'aimant permanent (26) traverse au moins en partie le frein (4) se trouvant dans la position de freinage.

24. Dispositif d'entraînement selon l'une quelconque des revendications 18 à 23, **caractérisé en ce que** le circuit magnétique correspondant à l'aimant permanent (26) présente, lorsque le frein (4) se trouve dans la position desserrée, un entrefer (31) entre le frein (4) et le boîtier (28) et **en ce que**, lorsque le frein (4) se trouve dans la position de freinage, l'entrefer (31) est fermé.

25. Dispositif d'entraînement selon l'une quelconque des revendications 18 à 24, **caractérisé en ce que** le dispositif de frein (3) présente un élément de ressort (32), **en ce que** l'élément de ressort (32) crée une précontrainte du frein (4) dans la position desserrée et **en ce que** l'aimant permanent (26) d'une part et l'élément de ressort (32) d'autre part sont conçus de telle manière que, lorsque le frein (4) se trouve dans la position de freinage, l'effet de force produit par l'aimant permanent (26) sur le frein (4) dépasse l'effet de force produit sur le frein (4) par l'élément de ressort (32) et **en ce que**, lorsque le frein (4) se trouve dans la position desserrée, l'effet de force produit sur le frein (4) par l'élément de ressort (32) dépasse l'effet de force produit par l'aimant permanent (26), de préférence **en ce que** l'élément de ressort (32) est réalisé en forme de rondelle élastique et **en ce que** le frein (4) est par ailleurs suspendu au dispositif de frein (3) au moyen de l'élément de ressort (32).

26. Dispositif d'entraînement selon l'une quelconque des revendications 18 à 25, **caractérisé en ce que** le frein (4) est couplé au troisième des éléments roue solaire (7), porte-satellites (8) et couronne (10) en vue de son freinage ou de son blocage par l'intermédiaire d'un autre engrenage (23) et **en ce qu'**il est prévu à cet effet un élément de roue dentée (25) en prise d'entraînement avec le troisième des éléments roue solaire (7), porte-satellites (8) et couronne (10) et relié au frein (4).

27. Dispositif d'entraînement selon l'une quelconque des revendications 18 à 26, **caractérisé en ce que** le mouvement de déplacement du frein (4) entre la position desserrée et la position de freinage est un mouvement linéaire d'environ 0,6 mm.

28. Dispositif d'entraînement selon l'une quelconque des revendications 18 à 27, **caractérisé en ce que** l'aimant permanent (26) est composé de plusieurs aimants permanents (26).

29. Dispositif d'entraînement selon l'une quelconque des revendications 1 à 28, **caractérisé en ce qu'**il est prévu un élément d'actionnement (20) et **en ce que** le dispositif de frein (3) est réalisé de telle manière que le frein (4) soit déplacé dans sa position desserrée lors de l'actionnement de l'élément d'actionnement (20).

30. Dispositif d'entraînement selon l'une quelconque des revendications 1 à 29, **caractérisé en ce que** le dispositif d'entraînement (1) est conçu pour l'actionnement de la porte coulissante (1'), du hayon (1") ou du couvercle de coffre à bagages d'un véhicule automobile.
